# EUROPEAN PATENT SPECIFICATION

(11) **EP 3 128 434 B1**
(45) Date of publication and mention of the grant of the patent: **05.01.2022**
(21) Application number: 15774288.3
(22) Date of filing: 28.01.2015
(51) Int. Cl.: H04L 29/06, H04W 12/10, H04W 12/06, H04W 12/08, H04W 4/00, H04W 4/80, H04L 29/08, G06F 13/38

(54) **INFORMATION-PROCESSING DEVICE, INFORMATION-PROCESSING METHOD, AND PROGRAM**
INFORMATIONSVERARBEITUNGSVORRICHTUNG, INFORMATIONSVERARBEITUNGSVERFAHREN UND PROGRAMM
DISPOSITIF DE TRAITEMENT D'INFORMATIONS, PROCÉDÉ DE TRAITEMENT D'INFORMATIONS ET PROGRAMME

(30) Priority: 31.03.2014 JP 2014071700
(43) Date of publication of application: 08.02.2017
(73) Proprietor: FeliCa Networks, Inc., Tokyo 141-0032 (JP)
(72) Inventor: WATANABE, Keitarou, Tokyo 141-0032 (JP); HAMADA, Yu, Tokyo 141-0032 (JP)
(74) Representative: Witte, Weller & Partner Patentanwälte mbB
(86) International application number: PCT/JP2015/052406
(87) International publication number: WO 2015/151569

(56) References cited:
- EP-A2- 2 115 935
- WO-A2-2008/070686
- JP-A- 2009 009 582
- JP-A- 2010 511 965
- JP-A- 2011 204 274
- None

## Description

### Technical Field

The present disclosure relates to an information processing device, an information processing method, and a program.

### Background Art

Integrated circuit (IC) chips that include memories that electronically store data and processing circuits that perform storing processes of the data have become widely used in place of magnetic-type cash cards and credit cards used since the past. Such IC chips are normally embedded in IC tags and IC cards, and can perform contactless data communication through wireless communication. Thus, the chips can offer services having an excellent maintenance property and anti-corrosion property, without impairing the appearance of the cards.

### Citation List

### Patent Literature

Patent Literature 1: JP 2007-65957A

### Summary of Invention

### Technical Problem

In recent years, technologies which enable data to be transmitted and received between different devices via a wireless communication path having a wider communication range than contactless wireless communication, like Bluetooth (registered trademark) or the like, have become widespread. Thus, there are also demands for gaining access from information processing devices, for example, smartphones, to IC chips provided in devices different from the information processing devices via a wireless communication path such as Bluetooth (registered trademark) to refer to and update information.

Meanwhile, it is assumed that, when data is transmitted and received via a wireless communication path having a wider communication range than contactless wireless communication, there will be a considerable number of cases of access from a plurality of applications operating on such an information processing device like a smartphone to an IC chip.

However, there are wireless communication standards in which one-to-one, e.g., device to device, communication is assumed. In communication based on such a standard, there are cases in which it is difficult for an access target (for example, an IC chip) to identify each of a plurality of access sources (for example, applications) for access from the access sources and exclusively control access from each of the plurality of access sources.

WO 2008/070686 A2 discloses a method for secure and efficient communication for mobile applications executed in a mobile operating environment. A primary mobile application can initiate a handshake that includes a unique identifier of the primary application and a random number for signing and/or certifying responsive requests. A recipient application can reference the unique identifier with a list of certified primary applications to verify the primary application. If verified, the recipient responds with the random number and a second random number that can sign and/or certify data requests sent by the primary application. According to some embodiments, random numbers can be hashed and/or truncated to provide low power encryption for such numbers. Further, round-trip policies can be enforced to provide reliable transmission of data. Accordingly, reliable, secure and low power synchronous communication can be conducted in a mobile environment.

Thus, the present disclosure proposes a novel and improved information processing device, information processing method, and program that enable access from each of a plurality of access sources to be exclusively controlled even in a communication environment based on a standard in which one-to-one communication is assumed.

### Solution to Problem

According to the present disclosure, there is provided an information processing device according to claim 1.

Further, according to the present disclosure, there is provided an information processing device according to claim 10 .

Yet, further there are provided corresponding information processing methods according to claims 12 and 13. Further, there is provided a program according to claim 14.

Further embodiments are disclosed in the dependent claims.

### Advantageous Effects of Invention

According to the present disclosure described above, an information processing device, information processing method, and program that enable access from each of a plurality of access sources to be exclusively controlled even in a communication environment based on a standard in which one-to-one communication is assumed are provided.

Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is an illustrative diagram for describing a schematic system configuration of an information processing system according to a first embodiment of the present disclosure.
[FIG. 2] FIG. 2 is an illustrative diagram for describing a schematic configuration of the information processing system according to the same embodiment.
[FIG. 3] FIG. 3 is an illustrative diagram for describing an aspect of communication between an information processing device and an external device.
[FIG. 4] FIG. 4 is an illustrative diagram for describing an aspect of communication between an information processing device and an external device.
[FIG. 5] FIG. 5 is an illustrative diagram for describing another example of the aspect of the communication shown in FIG. 4.
[FIG. 6] FIG. 6 is an illustrative diagram for describing an overview of an operation of the information processing system according to the same embodiment.
[FIG. 7] FIG. 7 is a block diagram showing an example of a functional configuration of the information processing system according to the same embodiment.
[FIG. 8] FIG. 8 is an illustrative diagram for describing an example of the flow of a series of processes of the information processing system according to the same embodiment.
[FIG. 9] FIG. 9 is a block diagram showing an example of a functional configuration of an information processing system according to a second embodiment of the present disclosure.
[FIG. 10] FIG. 10 is an illustrative diagram for describing an example of the flow of a series of processes of the information processing system according to the same embodiment.
[FIG. 11] FIG. 11 is an illustrative diagram for describing an example of the flow of a series of processes of the information processing system according to a practical example 1.
[FIG. 12] FIG. 12 is an illustrative diagram for describing examples of data structures of communication data for transmitting request data and result data.
[FIG. 13] FIG. 13 is an illustrative diagram for describing an example of the flow of a series of processes of the information processing system according to a practical example 2.
[FIG. 14] FIG. 14 is an illustrative diagram for describing an example of the flow of a series of processes of the information processing system according to a practical example 3.
[FIG. 15] FIG. 15 shows an example of a software configuration of an application according to each embodiment of the present disclosure.
[FIG. 16] FIG. 16 is a diagram showing an example of a hardware configuration of an external device 30according to each embodiment of the present disclosure.

### Description of Embodiment(s)

Hereinafter, (a) preferred embodiment(s) of the present disclosure will be described in detail with reference to the appended drawings. In this specification and the appended drawings, structural elements that have substantially the same function and structure are denoted with the same reference numerals, and repeated explanation of these structural elements is omitted.

Note that description will be provided in the following order.
1. First embodiment
   1.1. Presentation of problem
   1.2. Overview of operation
   1.3. Functional configuration
   1.4. Process
2. Second embodiment
   2.1. Overview
   2.2. Functional configuration
   2.3. Process
3. Practical example
   3.1. Practical example 1: Exclusive control in unit of processing
   3.2. Practical example 2: Exclusive control in unit of transaction
   3.3. Practical example 3: Communication sequence when authentication process is performed
4. Software configuration
5. Hardware configuration
6. Conclusion

### <1. First embodiment>

### [1.1.Presentation of problem]

Before an information processing system according to a first embodiment of the present disclosure is described, first, a schematic system configuration of the information processing system according to the present embodiment will be described, and then problems of the information processing system according to the present embodiment will be presented.

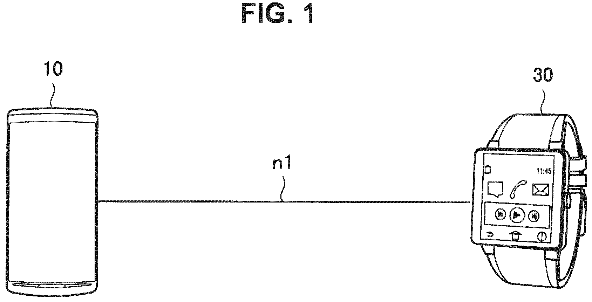

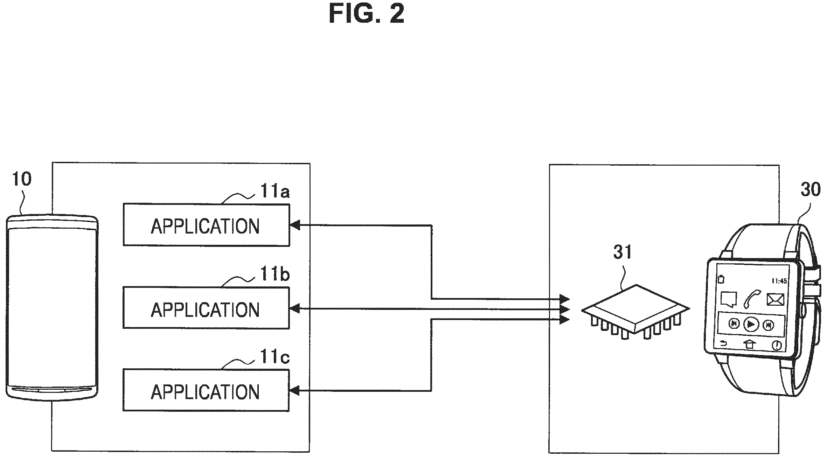

First, the schematic system configuration of the information processing system according to the present embodiment will be described with reference to FIGS. 1 and 2. FIG. 1 is an illustrative diagram for describing the schematic system configuration of the information processing system according to the present embodiment. In addition, FIG. 2 is an illustrative diagram for describing a schematic configuration of the information processing system according to the present embodiment.

As illustrated in FIG. 1, the information processing system according to the present embodiment includes an information processing device10 and an external device 30. The information processing device 10 and the external device 30are configured to be able to transmit and receive information to and from each other via a network n1 . The network n1 represents a wireless communication path which can connect different devices, for example, a communication path based on the Bluetooth (registered trademark) standard. Note that an aspect of the network n1 is not limited to a wireless communication path such as a communication path based on the Bluetooth (registered trademark) standard as long as the path can connect different devices. For example, the network n1 may be a wired communication path.

Here, the schematic configuration of the communication system according to the present embodiment will be described with reference to FIG. 2.

The information processing device 10 according to the present embodiment tcorresponds to a user terminal that is a so-called smartphone, and is configured such that a plurality of applications can operate in parallel thereon. For example, the example of FIG. 2 shows a case in which applications 11a to 11c are operating on the information processing device 10. Note that the applications 11a to 11c will be described as an "application 11"hereinbelow when it is not necessary to particularly distinguish the applications.

In addition, reference symbol 31 in FIG. 2 corresponds to a communication unit provided in the external device 30 for enabling the external device 30 to communicate with the information processing device 10 via the network n1 . The communication unit 31 is configured as, for example, an IC chip, which is embedded in the external device 30.

In the information processing system according to the present embodiment, each of the applications 11a to 11c operating on the information processing device 10 accesses the communication unit 31 via the network n1 to refer to and update information stored in the external device 30.

Meanwhile, there are standards in which one-to-one communication is assumed among communication standards for transmission and reception of information between different devices via a wireless or a wired communication path. Based on such a standard, when each of the applications 11a to 11c and the communication unit 31 transmit and receive information to and from each other, there are cases in which, for example, the communication unit 31 has difficulty identifying the transmission source of the information transmitted from the application 11 side.

As a specific example, there is a case in which the communication unit 31 is notified of the transmission source of data transmitted from any of the applications 11a to 11cmerely as the "information processing device 10." In that case, the communication unit 31 may have difficulty identifying the application operating in the information processing device 10 that has transmitted each piece of the data transmitted from the information processing device 10.

In addition, there is a case in which the information processing device 10 is notified of the destination of data transmitted from the communication unit 31 to the information processing device 10 merely as the "information processing device 10" likewise. Thus, the information processing device 10 may have difficulty identifying any of the applications 11a to 11c as the destination of the data transmitted from the communication unit 31side.

When it is difficult to identify a transmission source of data transmitted from each of the applications 11a to 11c as described above, for example, there are a considerable number of cases in which the communication unit 31 has difficulty controlling access from each of the applications 11a to 11c exclusively.

In communication (particularly, wireless communication) between different devices, in particular, there are cases in which the band of a communication path is limited more than the volume of data transmitted and received between the devices, and even the data is divided and transmitted and received in communication a plurality of times. Meanwhile, when it is difficult for the communication unit 31 to control access from the applications 11a to 11c exclusively, there is a possibility of the communication unit 31 not being able to correctly perform the series of communication operations to be divided among the plurality of times and performed due to interruption of other communication.

As an example of a method for resolving the problems, there is a method in which a sole configuration in the information processing device 10, such as an operating system (OS), mediates communication between the applications 11a to 11c and the communication unit 31.

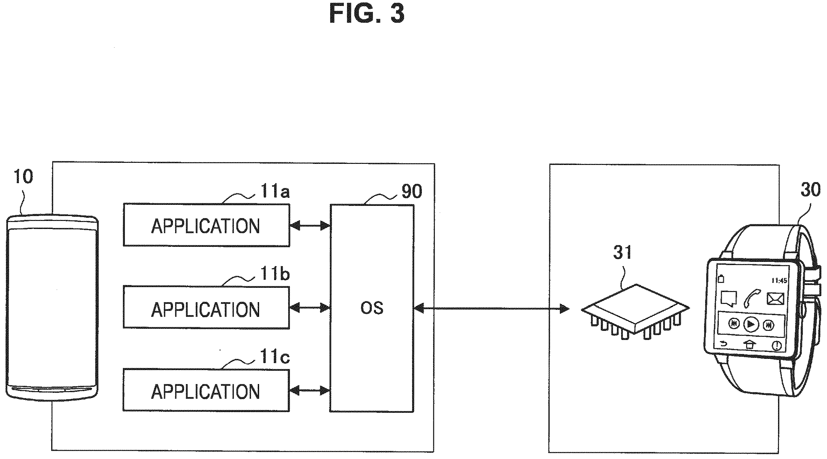

For example, FIG. 3 is an illustrative diagram for describing an aspect of communication between the information processing device 10 and the external device 30, showing an example in which a sole configuration of the information processing device 10 mediates communication between the applications 11a to 11c and the communication unit 31.

In the example shown in FIG. 3, an OS 90 of the information processing device 10 mediates communication between the applications 11a to 11c and the communication unit 31. Specifically, the OS 90 receives a request from each of the applications 11a to 11c to the communication unit 31, transmits the request to the communication unit 31, and notifies the application that is the requesting source of a response (process result) from the communication unit 31 to the request.

Due to this configuration, communication between the applications 11a to 11c and the communication unit 31, i.e., n-to-one communication, can be realized even in a communication environment based on a communication standard in which one-to-one communication is assumed in the example shown in FIG. 3.

With regard to this, it is necessary in the configuration shown in FIG. 3 to equip the OS 90 with the function of mediating communication between the applications 11a to 11c and the communication unit 31. However, there are a considerable number of cases in which it is difficult to add or alter the function itself into the OS 90 or a so-called framework, and therefore the method shown in FIG. 3 is not a realistic solution.

With regard to this, as another example to solve the above-described problem, there is a method of explicitly specifying a transmission source of data transmitted to the communication unit 31 or a destination of data transmitted from the communication unit 31.

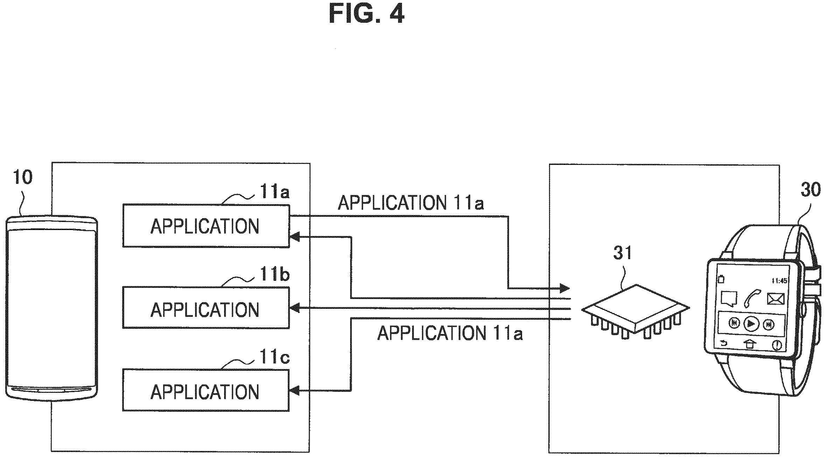

For example, FIG. 4 is an illustrative diagram for describing the aspect of communication between the information processing device 10 and the external device 30, showing an example in which a transmission source of data transmitted to the communication unit 31 and a destination of data transmitted from the communication unit 31 are explicitly specified.

In the example shown in FIG. 4, when an application11 transmits data to the communication unit 31, the data is associated with identification information with which the transmission source can be identified, for example, an application name, or the like.

As a specific example, the application 11a associates data to be transmitted to the communication unit 31 with identification information with which the application can be identified by supplementing the data with the identification information as supplementary information. In this case, the communication unit 31 can identify the application 11a as the transmission source of the data based on the identification information associated with the received data.

In addition, when data is transmitted to any of the applications 11a to 11c,the communication unit 31 associates identification information indicating the application that is the destination with the data.

As a specific example, the communication unit 31 associates identification information of the application 11a with data to be transmitted to the application 11a by supplementing the data with the identification information as supplementary information. In this case, the application 11a can identify itself (i.e., the application 11a) as the destination of the data based on the identification information associated with the received data. Likewise, the applications 11b and 11c can recognize that the destination of the data is not themselves based on the identification information associated with the received data. Note that, when the applications 11 recognize that the destination of received data is not themselves, the applications may discard the data.

With the configuration described above, communication between the applications 11a to 11c and the communication unit 31, i.e., n-to-one communication, can be realized in a communication environment based on a communication standard in which one-to-one communication is assumed in the example shown in FIG. 4.

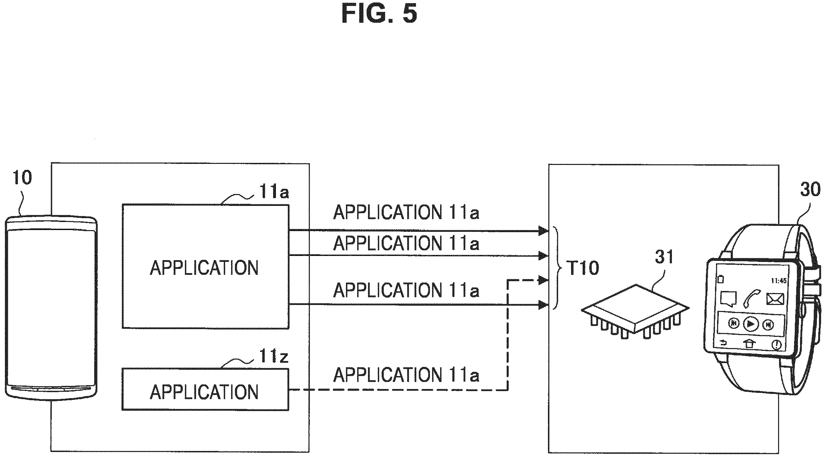

In the example shown in FIG. 4, however, there is a case in which an ill-intentioned application misrepresents identification information pretending to be another application that is different from the application itself and thus can access the communication unit 31. FIG. 5 is an illustrative diagram for describing another example of the aspect of the communication shown in FIG. 4, showing, for example, an example in which an ill-intentioned application pretends to be another application and accesses the communication unit 31.

In the example shown in FIG. 5, the application 11a divides data to be transmitted into a plurality of data fragments and transmits the data to the communication unit 31 in communication a plurality of times as a series of communication operations T10. At this time, the application 11a associates its identification information (for example, the application name) with each data fragment and notifies the communication unit 31 of the fact that the transmission source of each data fragment is the application itself (i.e., the application 11a).

Under such a circumstance, if an application 11z transmits data associated with the identification information of the "application 11a" to the communication unit 31 as shown in FIG. 5, for example, the communication unit 31 recognizes the "application 11a" as the transmission source of the data.

Thus, even if the communication unit 31 performs exclusive control based on the identification information associated with the received data, the unit has difficulty rejecting the data transmitted from the application 11z exclusively. That is, the application 11z can misrepresent the identification information and insert data including ill-intentioned codes into the data transmitted from the application 11a to the communication unit 31.

Further, data transmitted from the communication unit 31 is associated with identification information indicating the destination (for example, identification information indicating the application 11a) of the data, and is transmitted to each application operating on the information processing device 10. Thus, the application 11z can recognize the presence of the application 11a as a communication partner of the communication unit 31 based on the identification information associated with the data.

The information processing system according to the present embodiment has been conceived in consideration of these problems, and aims to enable an access target to control access from each of a plurality of access sources exclusively even in a communication environment based on a standard in which one-to-one communication is assumed. The information processing system according to the present embodiment will be described below in detail.

### [1.2. Overview of operation]

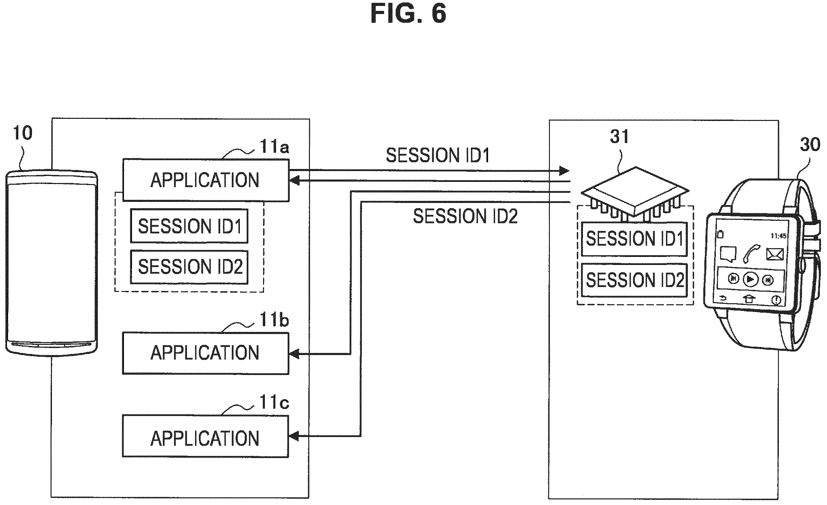

First, an overview of an operation of the information processing system according to the present embodiment will be described with reference to FIG. 6. FIG. 6 is an illustrative diagram for describing the overview of the operation of the information processing system according to the present embodiment. Note that the present description will be provided focusing on a case in which the application 11a and the communication unit 31 transmit and receive data to and from each other.

As shown in FIG. 6, before transmitting data to the communication unit 31 in the information processing system according to the present embodiment, the application 11a operating on the information processing device 10 generates a session ID1, and transmits the session ID1 to the communication unit 31. In addition, the application 11a and the communication unit 31 store key information shared together in advance, and generate a session ID2 that is different from the session ID1 by performing an irreversible process on the session ID1 together using the key information to encode (randomize) the ID.

As described above, in the information processing system according to the present embodiment, prior to transmitting and receiving data to and from each other, the application 11 and the communication unit 31 are in a state in which they retain the shared session ID1 and ID2. Note that the session ID1 corresponds to an example of "first identification information," and the session ID2 corresponds to an example of "second identification information."

On top of that, when transmitting data to the communication unit 31, the application 11a according to the present embodiment associates the session ID1 with the data. Upon acquiring the data from the application 11a, the communication unit 31 extracts the session ID associated with the data, and compares the extracted session ID to the session ID1retained by itself (i.e., the session ID1 acquired from the application 11a beforehand).

When the session ID extracted from the acquired data coincides with the session ID1retained by itself, the communication unit 31 recognizes the application 11a as the transmission source of the data, and sets the data as a processing target.

On the other hand, when the session ID extracted from the acquired data does not coincide with the session ID1retained by itself, the communication unit 31 recognizes one other than the application 11a as the transmission source of the data, and does not set the data as a processing target. In addition, when no session ID is associated with the acquired data, the communication unit 31 recognizes one other than the application 11a as the transmission source of the data, and likewise does not set the data as a processing target.

Further, when transmitting data to the application 11a, the communication unit 31 associates the session ID2 with the data. Upon acquiring the data from the communication unit 31, the application 11a extracts the session ID associated with the data, and compares the extracted session ID to the session ID2retained by itself.

When the session ID extracted from the acquired data coincides with the session ID2retained by itself, the application 11a recognizes itself (i.e., the application 11a) as the destination of the data, and sets the data as a processing target.

On the other hand, when the session ID extracted from the acquired data does not coincides with the session ID2retained by itself, the application 11a recognizes an application different from itself (i.e., the application 11a) as the destination of the data, and does not set the data as a processing target. In addition, when no session ID is associated with the acquired data, the application 11a likewise does not set the data as a processing target.

The operations of the application 11a described above are applied to other applications 11 likewise.

Note that it is desirable to set the session ID1 described above as information with which it is not easy to infer an application 11 serving as a transmission source. Thus, it is desirable for at least a part of the session ID1 to be configured to include randomized information. In addition, since the session ID2 is generated by performing the irreversible process on the session ID1 to encode (randomize) the ID as described above, at least a part thereof naturally includes randomized information.

Note that information described as the session ID1 and ID2 above is not necessarily limited to a session ID as long as at least a part thereof includes randomized information. For example, an application 11 may generate a random number and set the random number as the session ID1. In addition, as another example, an application 11 may perform an irreversible process on information changing according to time such as date and time to randomize the information, and use the randomized information as the session ID1. In addition, the example in which the session ID2 is generated by randomizing the session ID1 based on the key information shared bythe application 11 and the external device 30 has been described above. However, as long as the shared session ID2 can be generated by randomizing the session ID1 based on logic shared by the application 11 and the external device 30, a method of such generation is not necessarily limited to the method using key information.

Based on the configuration of the information processing system according to the present embodiment, the communication unit 31 of the external device 30 can identify an application 11 serving as a transmission source of data and can control access from a plurality of applications 11 exclusively.

Note that the session ID2 is information generated by performing the irreversible process on the session ID1 to encode (randomize) the ID as described above. For this reason, even if each application 11 acquires a session ID that is different from the session ID2 retained by itself, it is difficult for the application to ascertain an application 11 other than itself having the session ID2that corresponds to the acquired session ID.

In addition, an application 11 and the communication unit 31 transmit data in association with different session IDs (i.e., the session ID1 and ID2). Thus, a session ID associated with data transmitted to the application 11a is, for example, different from a session ID1 associated with data transmitted by the application 11a to the communication unit 31. For this reason, even if another application 11z receives data that is supposed to be transmitted to the application 11a, it is difficult for the application 11z to pretend to be the application 11a based on a session ID associated with the data.

With the configuration described above, in the information processing system according to the present embodiment, the external device 30 can control access from the plurality of applications 11 exclusively even in a communication environment based on a standard in which one-to-one communication is assumed.

Schematic operations of the information processing system according to the present embodiment have been described above with reference to FIG. 6.

### [1.3. Functional configuration]

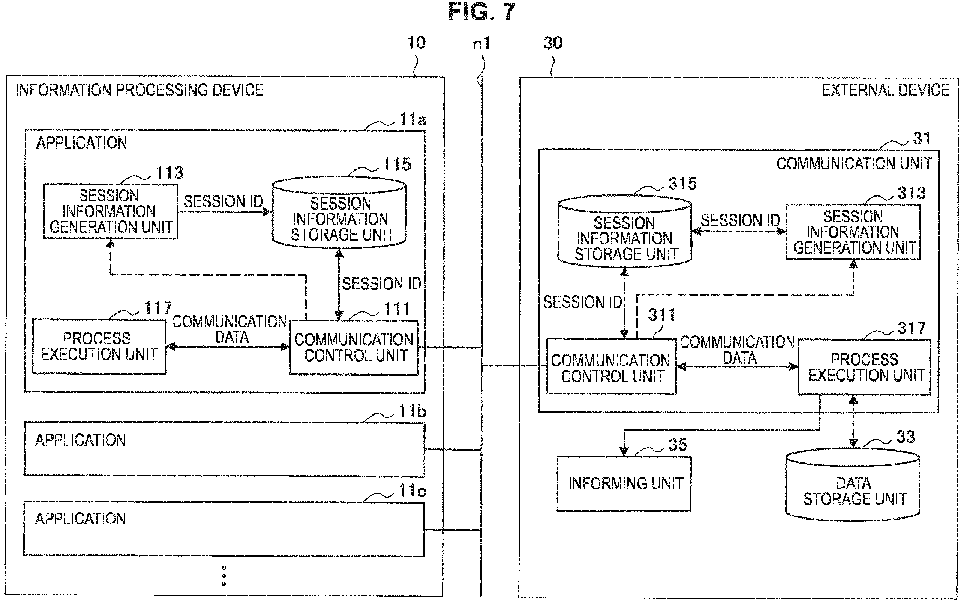

Next, a functional configuration of the information processing system according to the present embodiment will be described with reference to FIG. 7. FIG. 7 is a block diagram showing an example of the functional configuration of the information processing system according to the present embodiment.

As described above, the information processing device 10 is configured to allow the plurality of applications 11 to operate thereon. Each of reference symbols 11a to 11c in FIG. 7 schematically shows a functional configuration of one of the applications 11 corresponding to the applications 11a to 11c shown in FIG. 6. Note that, when the applications 11a to 11c are not particularly distinguished, each will be described as an "application 11" as described above. In addition, the external device 30 includes the communication unit 31 and a data storage unit 33. Furthermore, the external device 30 may include an informing unit 35. The communication unit 31 corresponds to the communication unit 31 shown in FIG. 6.

First, each configuration of the information processing device 10side will be described. As shown in FIG. 7, an application 11 includes a communication control unit 111, a session information generation unit 113, a session information storage unit 115, and a process execution unit 117.

The process execution unit 117 serves to schematically show a configuration for executing each process defined for the application 11. The process execution unit 117 transmits and receives information to and from the external device 30 via the communication control unit 111 to be described below when accessing the inside of the external device 30 via the network n1.

Note that, as information transmitted and received between the application 11 and the external device 30, for example, a process request from the application 11 to the external device 30, and a response from the external device 30with regard to a process result to the process request are exemplified. In addition, the application 11 and the external device 30 may transmit and receive data to be processed and data based on a process result to and from each other. Note that information that the process execution unit 117 transmits and receives to and from the external device 30 may be described as "communication data" hereinbelow to be distinguished from other information.

The session information generation unit 113 generates the session ID1 shown in FIG. 6 based on an instruction from the communication control unit 111. At this time, the session information generation unit 113 generates the session ID1 so that at least a part of the ID includes randomized information. Then, the session information generation unit 113 causes the generated session ID1 to be stored in the session information storage unit 115. Note that the session information storage unit 115 is a storage unit for storing the generated session ID1 and a session ID2 to be described below.

In addition, the session information generation unit 113 stores key information shared with the external device 30 in advance. Upon generating the session ID1, the session information generation unit 113 performs the irreversible process on the generated session ID1 based on the key information to encode (randomize) the ID, and thereby generates a session ID2 that is different from the session ID1. Then, the session information generation unit 113 causes the generated session ID2 to be stored in the session information storage unit 115.

Note that an installer of the application 11 may be configured such that, for example, the key information for generating the session ID2 is installed in the information processing device 10 along with each program (for example, a library) of the application 11. In addition, the session information generation unit 113 corresponds to an example of a "generation unit" of the information processing device 10 in which the applications 11 operate.

Upon receiving an instruction from the process execution unit 117 with regard to access to the external device 30, the communication control unit 111 instructs the session information generation unit 113 to generate the session ID1. Then, the communication control unit 111 reads the generated session ID1 from the session information storage unit 115, and notifies the external device 30 of the session ID1.

When the notification of the session ID1 toward the external device 30 is completed, the communication control unit 111 acquires communication data (for example, a process request with respect to the external device 30, or data to be transmitted) from the process execution unit 117. Then, the communication control unit 111 associates the session ID1 read from the session information storage unit 115 with the acquired communication data, and transmits the communication data associated with the session ID1 to the external device 30 via the network n1. Note that an operation performed on the external device 30 side upon receiving the communication data will be described separately below.

In addition, though details will be described below, when communication data is transmitted from the external device 30 to an application 11, the external device 30associates a session ID2 with the communication data, and then transmits the communication data to the information processing device 10 side. The communication data transmitted from the external device 30 to the information processing device 10 is received by the communication control unit 111 of each application 11 operating in the information processing device 10.

Upon receiving the communication data from the external device 30, the communication control unit 111 extracts the session ID associated with the received communication data. When the session ID can be extracted from the communication data, the communication control unit 111 compares the extracted session ID to the session ID2 stored in the session information storage unit 115.

When the session ID extracted from the communication data coincides with the session ID2 stored in the session information storage unit 115, the communication control unit 111 recognizes that the destination of the communication data is the application itself, and outputs the received communication data to the process execution unit 117.

On the other hand, when the session ID extracted from the communication data does not coincide with the session ID2 stored in the session information storage unit 115, the communication control unit 111 recognizes that the destination of the communication data is not the application itself, and does not set the communication data as a processing target. In addition, when no session ID is associated with the received communication data, the communication control unit 111 likewise does not set the communication data as a processing target. Note that, when the communication control unit 111 does not recognize the received communication data as a processing target, the unit may discard the communication data. Further, the communication control unit 111 corresponds to an example of a "control unit" of the information processing device 10 in which the applications 11 operate.

Next, each configuration of the external device 30 side will be described. As shown in FIG. 7, the communication unit 31 includes a communication control unit 311, a session information generation unit 313, a session information storage unit 315, and a process execution unit 317.

The data storage unit 33 is a storage unit for storing various kinds of data such as user information. The data storage unit 33 corresponds to, for example, a device of the IC chip embedded in the external device 30 for storing various kinds of data. In the information processing system according to the present embodiment, for example, an application 11 operating in the information processing device 10 accesses the communication unit 31 to refer to and update various kinds of data stored in the data storage unit 33. Note that the data storage unit 33 may be provided inside the communication unit 31.

According to a request from the information processing device 10, the process execution unit 317 executes a process indicated in the request. At this time, the process execution unit 317 transmits and receives communication data to and from the information processing device 10 via the communication control unit 311 to be described below.

In addition, the process execution unit 317 may read data stored in the data storage unit 33 and transmit the read data to the information processing device 10 as communication data according to a request from the information processing device 10. In addition, as another example, the process execution unit 317 may update data stored in the data storage unit 33 according to a request from the information processing device 10. Furthermore, the process execution unit 317 may acquire various kinds of data from the information processing device 10 and cause the various kinds of acquired data to be stored in the data storage unit 33.

In addition, the process execution unit 317 may allow the informing unit 35 to perform informing of the result of a process based on a request from the information processing device 10.

The informing unit 35 is a configuration for informing a user of the result of a process performed by the process execution unit 317. The informing unit 35 may be configured with, for example, a display device such as a display. In this case, the informing unit 35 may acquire display information indicating the result of a process performed based on a request from the information processing device 10 and display the acquired display information to inform the user of the result of the process.

Note that the aspect of the informing unit 35 described above is merely an example, and an aspect of the informing unit 35 is not particularly limited as long as the unit can inform a user of the result of a process based on a request from the information processing device 10. As a specific example, the informing unit 35 may be a device that informs a user of predetermined information using patterns of flashing on or off, such as light emitting diodes (LEDs). In addition, the informing unit 35 may be a device that informs a user of predetermined information by outputting a predetermined sound (or voice), such as a speaker.

When starting communication (transmission and reception of data) with each application 11 operating in the information processing device 10, the communication control unit 311 first receives the session ID1 transmitted from the application 11that is a communication partner. Then, the communication control unit 311 causes the received session ID1 to be stored in the session information storage unit 315. The session information storage unit 315 is a storage unit for storing the session ID1 acquired from the application 11 and a session ID2 to be described below. Note that the configuration of the communication control unit 311 for receiving the session ID1 transmitted from the application 11 and referring to the session ID1 and ID2 stored in the session information storage unit 315 corresponds to an example of an "acquisition unit."

When the acquired session ID1 is caused to be stored in the session information storage unit 315, the communication control unit 311 instructs the session information generation unit 313 to be described below to generate a session ID2. With reception of this instruction, the session ID2 is generated by the session information generation unit 313, and the session ID2 is stored in the session information storage unit 315.

Next, the communication control unit 311 receives communication data transmitted from each application 11 operating in the information processing device 10.

Upon receiving the communication data from the application 11, the communication control unit 311 extracts the session ID associated with the received communication data. When the session ID can be extracted from the communication data, the communication control unit 311 compares the extracted session ID to the session ID1 stored in the session information storage unit 315.

When the session ID extracted from the communication data coincides with the session ID1 stored in the session information storage unit 315, the communication control unit 311 recognizes that the communication data is communication data transmitted from the transmission source of the session ID1. In this case, the communication control unit 311 recognizes the received communication data as data to be processed, and outputs the communication data to the process execution unit 317.

On the other hand, when the extracted session ID does not coincide with the session ID1 stored in the session information storage unit 315, the communication control unit 311 recognizes that the communication data is communication data transmitted from a transmission source different from the transmission source of the session ID1. In this case, the communication control unit 311 does not set the received communication data as a processing target. In addition, the communication control unit 311 likewise does not set the received communication data as a processing target when no session ID is associated with the received communication data. Note that, when the received communication data is not recognized as a processing target, the communication control unit 311 may discard the communication data. In addition, when receiving another session ID1 during exclusive control based on one session ID1, the communication control unit 311 may not recognize the other session ID1 as a processing target and may refuse to start exclusive control based on the other session ID1.

With the configuration described above, the communication control unit 311 recognizes whether or not communication data is communication data transmitted from the transmission source of the session ID1 stored in the session information storage unit 315 based on the session ID associated with the communication data. Then, the communication control unit 311 sets only transmission data transmitted from the transmission source of the session ID1 as an exclusive processing target (such control may be called "exclusive control" below). Note that the configuration of the communication control unit 311 for performing the exclusive control as described above corresponds to an example of the "control unit" of the external device 30.

Note that a period in which the communication control unit 311 performs the exclusive control described above can be appropriately changed. For example, the communication control unit 311 may complete exclusive control with completion of reception of communication data recognized as a processing target. In addition, as another example, the communication control unit 311 may complete exclusive control with reception of a process request (i.e., a process request from an application 11) indicated by communication data recognized as a processing target and completion of a response to the requesting source of the process request. In addition, as still another example, the communication control unit 311 may determine continuation and completion of exclusive control based on an instruction from an application 11 that is the transmission source having the session ID1. In addition, as still another example, the communication control unit 311 may complete exclusive control when a period in which communication data associated with the session ID1 is not received is equal to or longer than a period decided in advance (in the case of a so-called timeout).

When the exclusive control is completed, the communication control unit 311 may discard the session ID1 and ID2 stored in the session information storage unit 315. This applies likewise to the application 11. That is, when the exclusive control by the communication control unit 311 of the external device 30 is completed, the communication control unit 111 of the application 11 may discard the session ID1 and ID2 stored in the session information storage unit 115.

In addition, the communication control unit 311 transmits communication data output from the process execution unit 317 to the information processing device 10 based on an instruction from the process execution unit 317. At this time, the communication control unit 311 associates the session ID2 stored in the session information storage unit 315 with the communication data acquired from the process execution unit 317, and transmits the communication data associated with the session ID2 to the information processing device 10.

With the configuration described above, the communication control unit 311 can transmit the communication data to the application 11 storing the same session ID as the session ID2 stored in the session information storage unit 315. Note that the application 11 storing the same session ID as the session ID2 stored in the session information storage unit 315 corresponds to the transmission source of the session ID1 which serves as the generation source of the session ID2.

In addition, when a session ID extracted from received communication data is different from the session ID1 stored in the session information storage unit 315, the communication control unit 311 may notify the transmission source of the communication data of the fact that the communication data will not be set as a processing target. In this case, the communication control unit 311 may causethe session information generation unit 313 to generate a session ID2 based on the extracted session ID and transmit the session ID2 to a notification destination in association with information to be notified of as communication data.

Note that, when transmitting communication data to the external device 30, the communication control unit 111 may divide the communication data into a plurality of data fragments and transmit each of the plurality of data fragments to the external device 30 (i.e., the communication control unit 311) in communication a plurality of times. In this case, the communication control unit 111 may associate the session ID1 with each of the data fragments. Accordingly, based on the session ID1 associated with each of the received data fragments, the communication control unit 311 can recognize each data fragment as a processing target, and restore the communication data based on the plurality of data fragments recognized as processing targets. This applies likewise to a case in which communication data is transmitted from the communication control unit 311 toward the information processing device 10 (i.e., the communication control unit 111). Note that details of the case in which communication data is divided to be transmitted and received in communication a plurality of times will be described separately below as practical examples.

The example of the functional configuration of the information processing system according to the present embodiment has been described above with reference to FIG. 7.

### [1.4. Process]

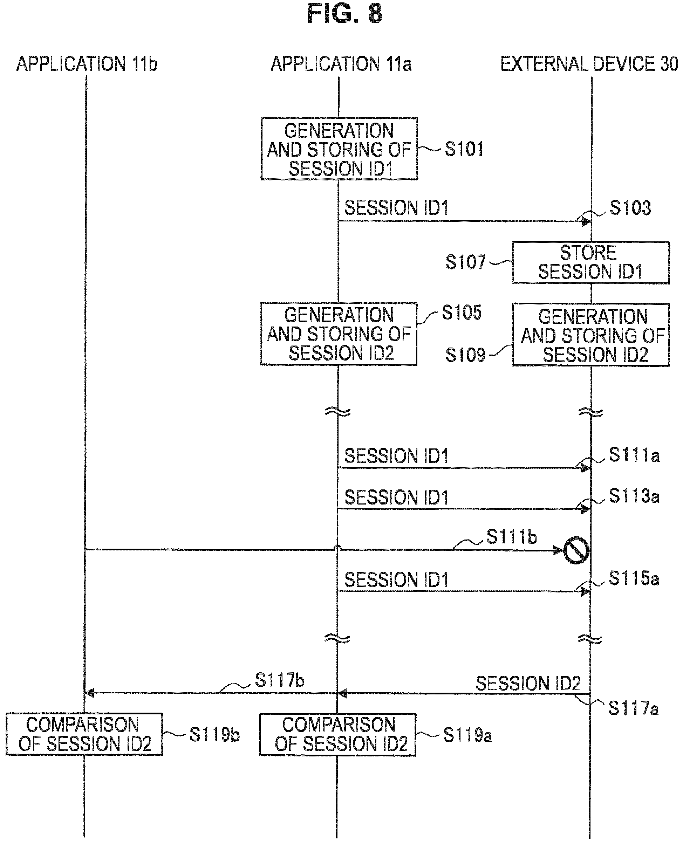

Next, an example of the flow of a series of processes of the information processing system according to the present embodiment will be described with reference to FIG. 8 exemplifying a case in which the application 11a operating on the information processing device 10 transmits and receives information to and from the external device 30. FIG. 8 is an illustrative diagram for describing the example of the flow of the series of processes of the information processing system according to the present embodiment.

### (Step S101)

Upon receiving an instruction from the process execution unit 117 to access the external device 30, the communication control unit 111 of the application 11a instructs the session information generation unit 113 to generate a session ID1. Upon receiving this instruction, the session information generation unit 113 generates the session ID1, and causes the generated session ID1 to be stored in the session information storage unit 115.

### (Step S103)

The communication control unit 111 reads the session ID1 generated by the session information generation unit 113 from the session information storage unit 115, and notifies the external device 30 of the read session ID1.

### (Step S105)

In addition, the session information generation unit 113 performs the irreversible process on the generated session ID1 to encode (randomize) the ID based on key information stored in advance, and thereby generates a session ID2 that is different from the session ID1. Then, the session information generation unit 113 causes the generated session ID2 to be stored in the session information storage unit 115.

### (Step S107)

The communication control unit 311 receives the session ID1 transmitted from the application 11a operating in the information processing device 10, and causes the received session ID1 to be stored in the session information storage unit 315.

### (Step S109)

When the acquired session ID1 is caused to be stored in the session information storage unit 315, the communication control unit 311 instructs the session information generation unit 313 to generate a session ID2. With reception of this instruction, the session ID2 is generated by the session information generation unit 313, and the session ID2 is stored in the session information storage unit 315.

### (Steps S111a to S115a)

When the notification of the session ID1 toward the external device 30 is completed, the communication control unit 111 of the application 111a acquires communication data from the process execution unit 117. Then, the communication control unit 111 associates the session ID 1 read from the session information storage unit 115 with the acquired communication data, and transmits the communication data associated with the session ID1 to the external device 30 via the network n1.

Upon receiving the communication data from the application 11a, the communication control unit 311 of the external device 30 extracts the session ID associated with the received communication data. When the session ID can be extracted from the communication data, the communication control unit 311 compares the extracted session ID to the session ID1 stored in the session information storage unit 315.

At this time, the session ID1 received from the application 11a is stored in the session information storage unit 315. Thus, the session ID associated with the communication data received from the application 11acoincides with the session ID1 stored in the session information storage unit 315. That is, when the extracted session ID coincides with the session ID1 stored in the session information storage unit 315, the communication control unit 311 recognizes the communication data received from the application 11a as data to be processed, and outputs the communication data to the process execution unit 317.

### (Step S111b)

Meanwhile, the communication control unit 311 is assumed to receive communication data from the application 11b that is different from the application 11a. Likewise in this case, the communication control unit 311 extracts the session ID associated with the communication data and compares the extracted session ID to the session ID1 stored in the session information storage unit 315.

However, the session ID associated with the communication data received from the application 11b does not coincide with the session ID1 stored in the session information storage unit 315. Thus, the communication control unit 311 recognizes that the communication data received from the application 11b is communication data transmitted from a transmission source that is different from the application 11a that is the transmission source of the session ID1. In this case, the communication control unit 311 does not set the received communication data as a processing target.

### (Steps S117a and S117b)

In addition, the communication control unit 311 of the external device 30 transmits communication data output from the process execution unit 317 to the information processing device 10 based on an instruction from the process execution unit 317. At this time, the communication control unit 311 associates the session ID2 stored in the session information storage unit 315 with the communication data acquired from the process execution unit 317, and transmits the communication data associated with the session ID2 to the information processing device 10. The communication data transmitted from the external device 30 to the information processing device 10 is received by the communication control unit 111 of each of the applications 11 operating in the information processing device 10.

Upon receiving the communication data from the external device 30, the communication control unit 111 of the application 11a extracts the session ID associated with the received communication data. When the session ID can be extracted from the communication data, the communication control unit 111 compares the extracted session ID to the session ID2 stored in the session information storage unit 115.

At this time, the session ID associated with the communication data and the session ID2 stored in the session information storage unit 115 have been generated based on the same session IDs1 and the key information shared by the application 11a and the external device 30.Thus, the session ID associated with the communication data received from the external device 30 coincides with the session ID2 stored in the session information storage unit 115. In this case, the communication control unit 111 recognizes the communication data received from the external device 30as data to be processed, and outputs the communication data to the process execution unit 117.

In a similar way, upon receiving the communication data from the external device 30, the communication control unit 111 of the application 11b extracts the session ID associated with the received communication data. When the session ID can be extracted from the communication data, the communication control unit 111 compares the extracted session ID to the session ID2 stored in the session information storage unit 115.

On the other hand, the session ID2 stored in the session information storage unit 115 and the session ID associated with the communication data are generated based on the different session IDs1. Thus, the session ID associated with the communication data received from the external device 30 does not coincide with the session ID2 stored in the session information storage unit 115. In this case, the communication control unit 111 recognizes that the destination of the received communication data is not the application itself, and does not set the communication data as a processing target.

Based on the above-described configuration, in the information processing system according to the present embodiment, the communication unit 31 of the external device 30 can identify an application 11 serving as a transmission source of data, and thus can control access from the plurality of applications 11 exclusively. Note that the example in which the session ID2 is generated by randomizing the session ID1 based on the key information between the application 11 and the external device 30 has been described above. However, a method of such generation is not necessarily limited to the method using key information as long as a shared session ID2 can be generated by randomizing a session ID1 based on logic shared by an application 11 and the external device 30.

Note that the session ID2 is information generated by performing the irreversible process on the session ID1 to encode the ID as described above. For this reason, even if each application 11 acquires a session ID that is different from the session ID2 retained by itself, it is difficult for the application to ascertain an application 11 other than itself having the session ID2that corresponds to the acquired session ID.

In addition, an application 11 and the communication unit 31 transmit communication data in association with different session IDs (i.e., the session ID1 and ID2). As a specific example, a session ID associated with communication data transmitted to the application 11a is different from a session ID1 associated with communication data transmitted by the application 11a to the communication unit 31. For this reason, even if another application 11z receives communication data that is supposed to be transmitted to the application 11a, it is difficult for the application 11z to pretend to be the application 11a based on a session ID associated with the communication data.

In addition, with regard to the example of the exclusive control described above, the example in which the external device 30 processes only a request from one application 11 during the exclusive control has been described. However, the external device 30 may process each of individual processes exclusively based on requests from the plurality of applications 11 as long as they can be processed in parallel. As a specific example, when processing targets based on requests from the plurality of applications 11 are different pieces of data stored in the external device 30, the external device 30 may process the requests from the applications 11 in parallel.

With the configuration described above, in the information processing system according to the present embodiment, the external device 30 can control access from the plurality of applications 11 exclusively even in a communication environment based on a standard in which one-to-one communication is assumed.

### <2. Second embodiment>

### [2.1. Overview]

Next, an information processing system according to a second embodiment will be described. In the first embodiment described above, the applications 11 on the information processing device 10side and the external device 30 generate the session ID2 individually.

On the other hand, the information processing system according to the second embodiment is different from the information processing system according to the first embodiment described above in that an application 11 generates a session ID2 and notifies the external device 30 of the generated session ID2. Thus, the information processing system according to the present embodiment will be described below focusing on differences from the information processing system according to the first embodiment described above.

### [2.2. Functional configuration]

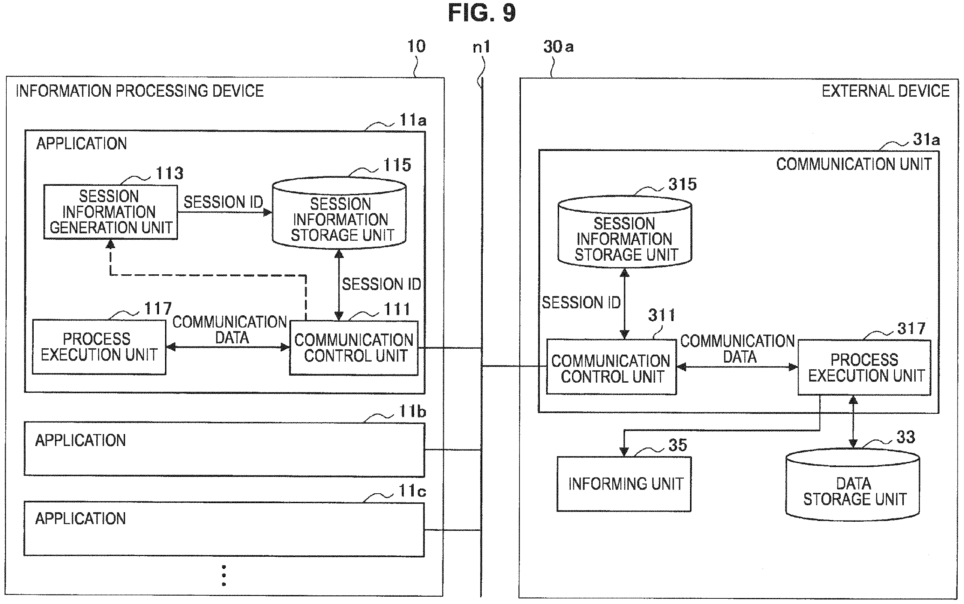

An example of a functional configuration of the information processing system according to the present embodiment will be described with reference to FIG. 9. FIG. 9 is a block diagram showing an example of the functional configuration of the information processing system according to the present embodiment.

First, description will be provided focusing on a configuration of the information processing device 10side. Operations of a communication control unit 111 and a session information generation unit 113 of the information processing device 10 according to the present embodiment are different from those of the information processing device 10 according to the first embodiment described above (see FIG. 7). Thus, the communication control unit 111 and the session information generation unit 113 will be described focusing on differences from those of the first embodiment described above. Note that the external device 30 according to the present embodiment may be referred to as an "external device 30a" below in order to explicitly distinguish the device from the external device 30according to the first embodiment described above.

In the first embodiment described above, the session information generation unit 113 generates the session ID2 by performing the irreversible process on the session ID1 based on the logic (for example, the key information) stored in advance and shared with the external device 30 to encode (randomize) the ID.

On the other hand, a method for generating a session ID2 is not particularly limited as long as the session information generation unit 113 according to the present embodiment can generate the session ID2 such that the ID is different from a session ID1 and includes randomized information at least in its part. Thus, it is not necessary for the session information generation unit 113 according to the present embodiment to retain key information shared with the external device 30a. The session information generation unit 113 according to the present embodiment may of course generate a session ID2 by performing an irreversible process on a session ID1 based on key information to encode (randomize) the ID, like the session information generation unit 113 according to the first embodiment described above.

In addition, the communication control unit 111 according to the present embodiment performs an operation when the unit starts communication with the external device 30a different from that the communication control unit 111 according to the first embodiment described above.

Specifically, upon receiving an instruction from a process execution unit 117 to access the external device 30a, the communication control unit 111 according to the present embodiment instructs the session information generation unit 113 to generate session ID1 and ID2. Then, the communication control unit 111 reads the generated session ID1 and ID2 from the session information storage unit 115, and notifies the external device 30a of the read session ID1 and ID2. Note that succeeding processes are similar to those of the communication control unit 111 according to the first embodiment described above.

Next, description will be provided focusing on a configuration of the external device 30a side. The external device 30 according to the present embodiment is different from that of the first embodiment described above mainly in terms of the configuration of a communication unit 31. Specifically, the communication unit 31 according to the present embodiment is different from the communication unit 31 according to the first embodiment described above in that a session information generation unit 313 is not included and an operation of the communication control unit 311 is different.

Thus, in the present description, the operation of the communication control unit 311 will be mainly described focusing on differences from the first embodiment described above. Note that the communication unit 31 according to the present embodiment may be referred to as a "communication unit 31a" below in order to explicitly distinguish the unit from the communication unit 31 according to the first embodiment described above.

The communication control unit 311 of the communication unit 31a according to the present embodiment first receives the session ID1 and ID2 transmitted from an application 11that is a communication partner when the unit starts communication (transmission and reception of data) with each application 11 operating in the information processing device 10. Then, the communication control unit 311 causes the received session ID1 and ID2 to be stored in the session information storage unit 315.

As described above, the communication control unit 311 of the communication unit 31a is different from the communication control unit 311 according to the first embodiment described above in that the unit acquires the session ID2 from the application 11 serving as a communication partner. Note that succeeding processes are similar to those of the communication control unit 311 according to the first embodiment described above.

Note that when a session ID1 extracted from received communication data is different from the session ID1 stored in the session information storage unit 315, the communication control unit 311 of the communication unit 31a may notify the transmission source of the communication data of the fact that the communication data will not be set as a processing target. In this case, the communication control unit 311 may extract the session ID2 associated with the communication data and transmit the session ID2 in association with information to be notified of to the notification destination as communication data.

The example of the functional configuration of the information processing system according to the present embodiment has been described above with reference to FIG. 9, focusing on the differences from the information processing system according to the first embodiment described above.

### [2.3. Process]

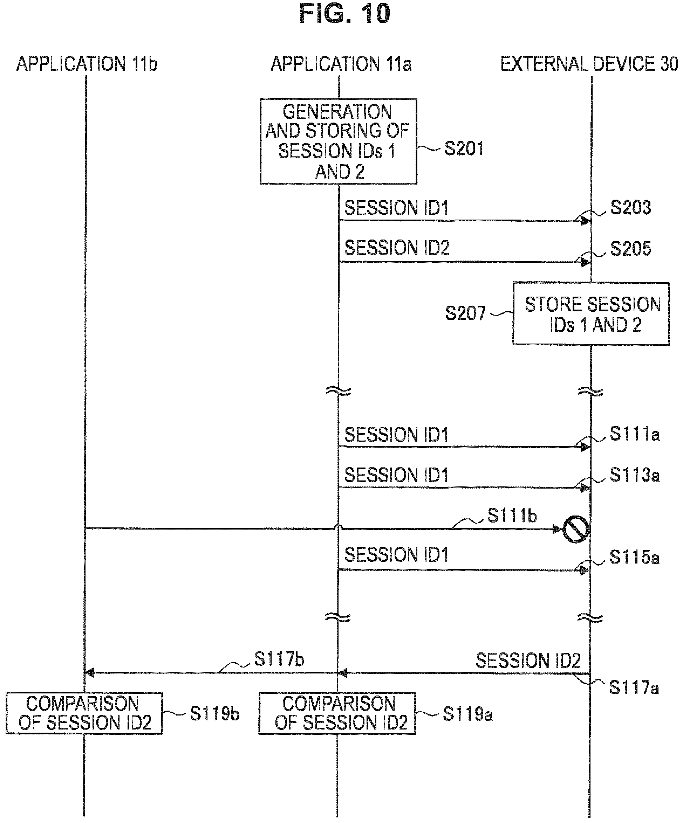

Next, an example of the flow of a series of processes of the information processing system according to the present embodiment will be described with reference to FIG. 10 exemplifying a case in which the application 11a operating on the information processing device 10 transmits and receives information to and from the external device 30a. FIG. 10 is an illustrative diagram for describing the example of the flow of the series of processes of the information processing system according to the present embodiment.

Note that, as described in "2.2. Functional configuration," the operation of the information processing system according to the present embodiment in which the external device 30a is notified of a session ID2 generated by an application 11 is different from the information processing system according to the first embodiment described above. Thus, the present description will be provided focusing on the difference from the information processing system according to the first embodiment described above.

### (Step S201)

Upon receiving an instruction from the process execution unit 117 to access the external device 30a, the communication control unit 111 of the application 11a instructs the session information generation unit 113 to generate session IDs 1 and 2. Upon receiving this instruction, the session information generation unit 113 generates the session IDs 1 and 2, and causes the generated session IDs 1 and 2 to be stored in the session information storage unit 115.

### (Steps S203 and S205)

Then, the communication control unit 111 reads the generated session ID1 and ID2 from the session information storage unit 115, and notifies the external device 30a of the read session ID1 and ID2.

### (Step S207)

The communication control unit 311 of the external device 30a first receives the session ID1 and ID2 transmitted from an application 11a when the unit starts communication (transmission and reception of data) with the application 11a operating in the information processing device 10. Then, the communication control unit 311 causes the received session ID1 and ID2 to be stored in the session information storage unit 315.

Accordingly, both the application 11a and the external device 30a retain the shared session ID1 and ID2. Note that succeeding operations are similar to those of the information processing system according to the first embodiment described above.

As described above, in the information processing system according to the present embodiment, the application 11 generates the session ID1 and ID2, and notifies the external device 30a of the session ID1 and ID2.

Then, when transmitting communication data to the external device 30a, the communication control unit 111 of the application 11 associates the session ID1 with the communication data. In this case, the communication control unit 311 of the external device 30a recognizes that the transmission source of the communication data is the application 11a based on the session ID1 associated with the communication data.

In addition, when transmitting communication data to the information processing device 10, the communication control unit 311 of the external device 30a associates the session ID2 with the communication data. In this case, the communication control unit 111 of the application 11a operating on the information processing device 10 recognizes that the destination of the communication data is the application itself(the application 11a) based on the session ID2 associated with the communication data.

With this configuration, the information processing system according to the present embodiment can realize exclusive control of the external device 30 even in a communication environment based on a standard in which one-to-one communication is assumed, like the communication system according to the first embodiment described above.

In addition, in the information processing system according to the present embodiment, it is not necessary for the external device 30 to generate a session ID2. Thus, in the information processing system according to the present embodiment, it is possible to lower a processing load of the external device 30 more than in the information processing system according to the first embodiment described above.

### <3. Practical examples>

Next, as practical examples, an example of exclusive control in the information processing system according to the present embodiment will be described. Note that, in the present description, an example in which, when transmitting and receiving communication data to and from each other, the information processing device 10andthe external device 30 divide and transmit the communication data in communication a plurality of times will be described.

### [3.1. Paractical example 1: Exclusive control in unit of processing]

First, as Practical example 1, an example in which a period during which the external device 30 receives only a request from the application 11a exclusively, executes a process based on the request, and notifies the application 11a of the result of the process is set as an object of exclusive control will be described. Note that a series of processes in which a request is transmitted from an application 11 to the external device 30 and the external device 30 notifies the application 11 of the result of a process based on the request may be referred to as "processing" below.

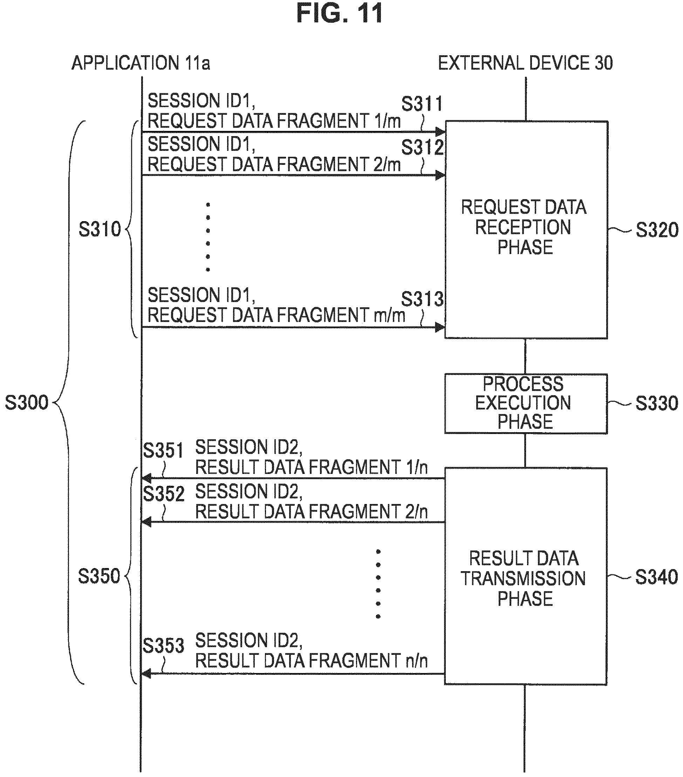

For example, FIG. 11 is an illustrative diagram for describing an example of the flow of the series of processes of the information processing system according to Practical example 1. Specifically, FIG. 11 shows the flow of processes in which a request is transmitted from the application 11a to the external device 30 and the application 11a is notified of the result of the processes based on the request from the external device 30, i.e., processes equivalent to one processing round. Note that, although both the application 11a and the external device 30 are described as already retaining the shared session ID1 and ID2in order to facilitate understanding of the description in the example shown in FIG. 11, the example is not necessarily limited to the present aspect. For example, when transmitting first communication data to the external device 30, the application 11a may notify the external device 30 of the session ID1 (and the session ID2)along with the communication data.

In FIG. 11, reference symbol S300 represents one processing round. As shown in FIG. 11, the processing S300 includes, for example, a request data transmission phase S310, a request data reception phase S320, a process execution phase S330, a result data transmission phase S340, and a result data reception phase S350.

The request data transmission phase S310 represents a phase in which the application 11a transmits request data for requesting a desired process from the external device 30 to the external device 30 as communication data. Note that the fact that the application 11a associates a session ID1 with the request data when transmitting the request data to the external device 30 is as described above.

In addition, when transmitting communication data to the external device 30, the application 11a may divide and transmit the communication data in communication a plurality of times as described above. Thus, in the example shown in FIG. 11, for example, the application 11a divides the request data into m data fragments as indicated by reference symbols S311 to S313, and transmits the request data in communication m times for each data fragment. Note that the m data fragments divided from the request data may be referred to as request data fragments 1/m to m/m below.

In addition, when transmitting each of the request data fragments 1/m to m/m to the external device 30, the application 11a associates the session ID1 with a request data fragment i/m (i is an integer satisfying 1≤i≤m). Accordingly, the external device 30 can perform exclusive control such that only the request data fragment i/m transmitted from the application 11a is set as a processing target based on the session ID1.

Note that, when transmitting the final request data fragment m/m among the series of request data fragments 1/m to m/m, the application 11a may associate control information indicating that the request data fragment m/m is the final data with the request data fragment m/m as indicated by reference symbol S313. Accordingly, the external device 30 can recognize the request data fragment m/m associated with the control information as the final data among the series of request data fragments 1/m to m/m.

The request data reception phase S320represents a phase in which the external device 30 receives the request data transmitted from the application 11a.

In the request data reception phaseS320, the external device 30 receives the request data (in other words, the communication data) transmitted from each application 11 operating on the information processing device 10. At this time, the external device 30 recognizes whether the application11a is the transmission source of the request data based on the session ID1 associated with the received request data. Then, the external device 30 recognizes that only the request data transmitted from the application 11a as a processing target, and executes the request of the application 11a indicated by the request data. Note that the phase in which the external device 30 executes the request of the application 11a indicated by the request data corresponds to the process execution phase S330.

In addition, the external device 30 may receive the request data by dividing the data for communication a plurality of times as described above. In this case, after receiving the series of request data fragments 1/m to m/m, the external device 30 may restore the request data in the form before the division by combining the request data fragments 1/m to m/m, and recognize the request of the application 11a based on the restored request data.

The result data transmission phase S340represents a phase in which the external device 30 transmits result data indicating the result of the process executed in the process execution phase S330 to the application 11a that is the transmission source of the request data as communication data. Note that the fact that the external device 30 associates the session ID2 with the result data when the device transmits the result data to the application 11a is as described above. In addition, the result data reception phase S350represents a phase in which the application 11areceives the result data transmitted from the external device 30.

Note that, when transmitting the communication data to the application 11a, the external device 30 may divide and transmit the communication data in communication a plurality of times. Thus, in the example shown in FIG. 11, for example, the external device 30 divides the result data into n data fragments and transmits the result data in communication n times for each data fragment as indicated by reference symbols S351 to S353. Note that the n data fragments divided from the result data may be described as "result data fragments 1/n to n/n."

In addition, when transmitting each of the result data fragments 1/n to n/n to the application 11a, the external device 30 associates a session ID2 with a result data fragment j/n (j is an integer satisfying 1≤j≤n). Accordingly, based on the session ID2, the application 11a can recognize that the result data fragment j/n transmitted from the external device 30 is data transmitted to the application itself(the application 11a).

Note that, when transmitting the final result data fragment n/n among the series of result data fragments 1/n to n/n, the external device 30 may associate control information indicating that the result data fragment n/n is the final data with the result data fragment n/n as indicated by reference symbol S353. Accordingly, the application 11a can recognize the result data fragment n/n associated with the control information as the final data among the series of result data fragments 1/n to n/n.

In the result data reception phaseS350, the application 11a receives the result data (in other words, the communication data) transmitted from the external device 30. At this moment, the application 11a recognizes whether the destination of the result data is the application itself (the application 11a) based on the session ID2 associated with the received result data. Then, when the received result data is data destined for the application itself, the application 11a recognizes the result data as a processing target, and acquires information indicating the result of the process from the result data. When the result data is divided and transmitted in communication a plurality of times, the application 11a may of course restore the result data by combining the received result data fragments 1/n to n/n.

The content described above is the flow of the series of processes of the processing S300. Note that, when performing exclusive control in units of processing, for example, the external device 30 may start the exclusive control with reception of the session ID1 from the application 11a. In addition, the external device 30 may terminate the exclusive control with transmission of the final result data fragment n/n among the series of result data fragments 1/n to n/n. In addition, as another example, the external device 30 may acquire control information indicating that reception of the final result data fragment n/n from the application 11a has been completed and terminate the exclusive control with the acquisition of the control information.

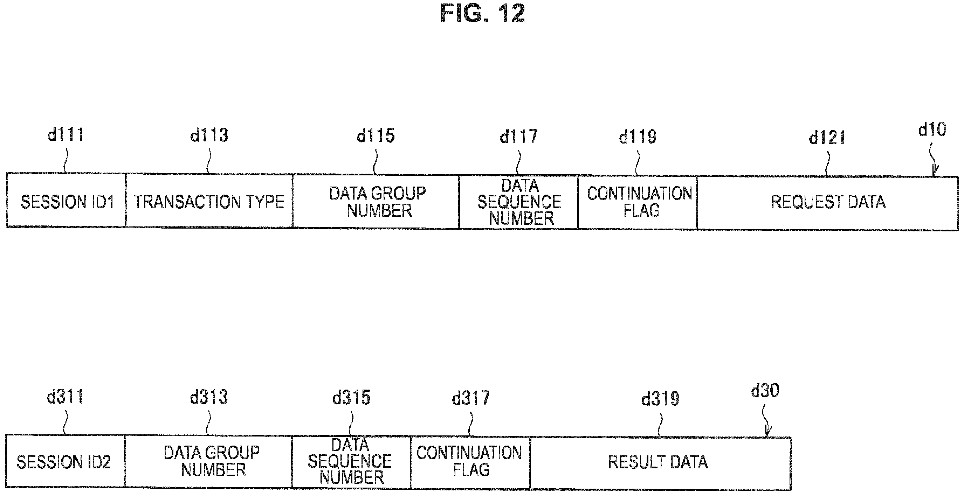

Next, examples of data structures of communication data for transmitting the request data and the result data described above will be described with reference to FIG. 12. FIG. 12 is an illustrative diagram for describing the examples of the data structures of communication data for transmitting the request data and the result data.

In FIG. 12, reference symbol d10 indicates the example of the data structure of the communication data for transmitting the request data from an application 11 to the external device 30.

As shown in FIG. 12, the communication data d10 includes a session ID1 d111, transaction type d113, data group number d115, data sequence number d117, continuation flag d119, and request data d121.

The session ID1 d111 is a field for storing the session ID1 of which the application 11 notifies the external device 30. In addition, the request data d121 is a field for storing request data to be transmitted.

In addition, the data sequence number d117 is a field for storing control information to be used when the application 11 divides the request data and transmits the data to the external device 30 in communication a plurality of times. The data sequence number d117 stores control information for identifying each of the request data fragments 1/m to m/m, in other words, control information indicating the sequence number of each of the request data fragments 1/m to m/m.

The continuation flag d119 is mainly used in dividing and transmitting request data in communication a plurality of times, and indicates the field in which control information indicating whether the request data fragment i/m stored in the field indicated by the request data d121 is the final request data fragment m/m is stored.

For example, when the request data fragment i/m stored in the field indicated by the request data d121 is the final request data fragment m/m, a flag indicating "false" is set in the continuation flag d119. In addition, when the request data fragment i/m is data other than the final request data fragment m/m, a flag indicating "true" is set in the continuation flag d119.

That is, as long as "true" is set in the continuation flag d119, the external device 30 continues receiving the request data fragment i/m. In addition, when "false" is set in the continuation flag d119, the external device 30 recognizes that the received request data fragment i/m is the final request data fragment m/m, and terminates the process of receiving the request data fragment i/m.

Note that, when the request data is not divided and transmitted in communication a plurality of times (i.e., the request data is transmitted in one transmission), the flag indicating "false" may be set in the continuation flag d119.

In addition, the transaction type d113 and the data group number d115 are used when exclusive control is performed in units of a transactions by setting a plurality of processing rounds as one transaction. Note that cases in which exclusive control is performed in units of a transactions will be described in detail as Practical examples 2 and 3.

The transaction type d113 is a field for storing control information indicating a start, continuation, and an end of a transaction. For example, any one of "start,""end," and "normal" is set in the transaction type d113 as a flag.

The "start" flag is a flag with which the application 11 instructs the external device 30 to start a transaction. In addition, the "end" flag is a flag with which the application 11 instructs the external device 30 to end the transaction that has started. That is, the external device 30 recognizes a start of a transaction with reception of the communication data d10 in which the "start" flag has been set, and thereby starts exclusive control. In addition, the external device 30 recognizes an end of a transaction with reception of the communication data d10 in which the "end" flag has been set, and thereby ends the exclusive control that has started.

The "normal" flag is a flag set when neither "start" nor "end" is applicable. When the external device 30 receives the communication data d10 in which the "normal" flag has been set while a transaction has started based on the "start" flag, the device recognizes that the transaction continues. In addition, when the external device 30 receives the communication data d10 in which the "normal" flag has been set while a transaction has not started, the device may recognize that exclusive control in units of processing has been instructed.

The data group number d115 is a field for storing identification information for identifying each processing. The external device 30 can identify the processing of the request data stored in the field indicated by the request data d121 based on identification information stored in the data group number d115. Thus, for example, even in a situation in which request data is re-transmitted, the external device 30 can identify the processing of the request data re-transmitted along based on identification information stored in the data group number d115.

In addition, reference numeral d30 shows the example of the data structure of communication data for transmitting result data from the external device 30 to the application 11.

As shown in FIG. 12, the communication data d30 includes a session ID2 d311, a data group number d313, a data sequence number d315, a continuation flag d317, and a request data d310.

The session ID2 d311 is a field for storing the session ID2 of which the external device 30 notifies the application 11. In addition, the result data d319 is a field for storing result data to be transmitted.

In addition, the data sequence number d315 is a field for storing control information to be used when the external device 30 divides the result data and transmits the data to the application 11 in communication a plurality of times. The data sequence number d315 stores control information for identifying each of the result data fragments 1/n to n/n, in other words, control information indicating the sequence number of each of the result data fragments 1/n to n/n.

The continuation flag d317 is mainly used for dividing and transmitting the result data in communication a plurality of times, and indicates the field in which control information indicating whether the result data fragment j/n stored in the field indicated by the result data d319 is the final result data fragment n/n is stored.

For example, when the result data j/n stored in the field indicated by the result data d319 is the final result data n/n, a flag indicating "false" is set in the continuation flag d317. In addition, when the result data fragment j/n is data other than the final result data fragment n/n, a flag indicating "true" is set in the continuation flag d317.

That is, as long as "true" is set in the continuation flag d119, the application 11 continues receiving the result data fragment j/n. In addition, when "false" is set in the continuation flag d317, the application 11 recognizes that the received result data fragment j/n is the final result data fragment n/n, and terminates the process of receiving the result data fragment j/n.

Note that, when the result data is not divided and transmitted in communication a plurality of times (i.e., the result data is transmitted in one transmission), the flag indicating "false" may be set in the continuation flag d317.

In addition, the data group number d313 is similar to the data group number d115 of the communication data d10.

Note that the data structures of the communication data d10 and d30 shown in FIG. 12 are merely examples, and information to be included in the communication data d10 and d30 is not particularly limited as long as the series of processes described as each practical example can be realized. As a specific example, the communication data d10 and d30 may be provided with a separate extended field for storing information other than the information shown in FIG. 12. In addition, as described in the second embodiment above, when the information processing device 10 notifies the external device 30 of the session ID2, a field for storing the session ID2 may be separately provided in the communication data d10.

As Practical example 1, an example in which the external device 30 performs exclusive control in a unit of processing and examples of the data structures of the communication data transmitted and received between the external device 30 and the application 11 have been described above.

### [3.2. Practical example 2: Exclusive control in unit of transaction]

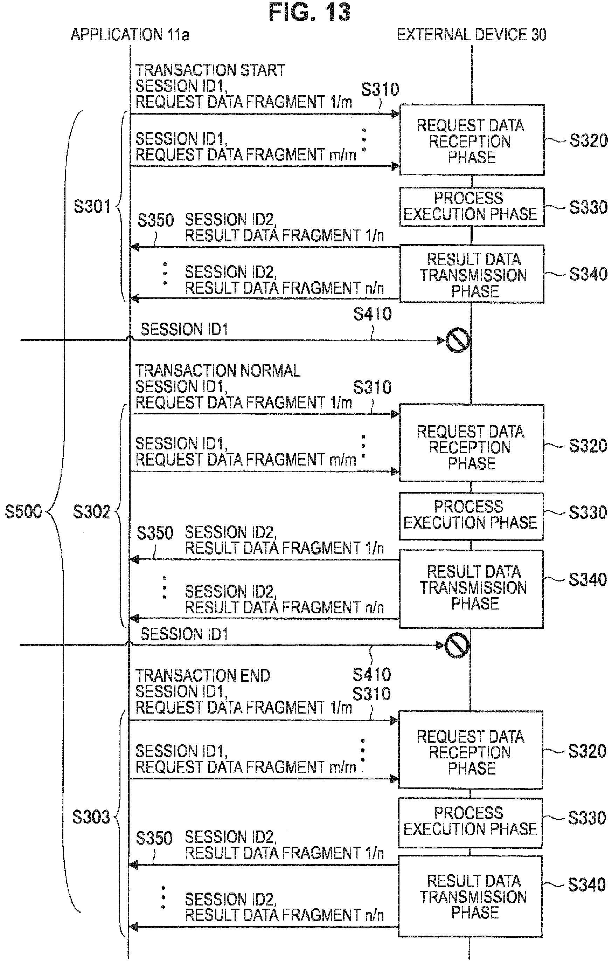

Next, an example in which the external device 30 performs exclusive control in unit of transactions will be described with reference to FIG. 13. FIG. 13 is an illustrative diagram for describing an example of the flow of a series of processes of the information processing system according to Practical example 2. Note that FIG. 13 shows an example in which processing S301 to S303 is managed as one transaction S500. In addition, although both the application 11a and the external device 30 are described as retaining the shared session ID1 and ID2in advance in the example shown in FIG. 13in order to facilitate understanding of the description, an example is not necessarily limited to the present aspect. For example, when transmitting first communication data to the external device 30, the application 11a may notify the external device 30 of the session ID1 (and the session ID2) along with the communication data.

As shown in FIG. 13, when instructing the external device 30 in exclusive control in units of transactions, the application 11a associates control information indicating a start of a transaction with a request data fragment 1/m transmitted first in first processing S301.

Specifically, when transmitting the first request data fragment 1/m in the processing S301, the application 11a may set the "start" flag in the transaction type d113 of the communication data d10 shown in FIG. 12, and transmit the communication data to the external device 30. Accordingly, based on the "start" flag set in the transaction type d113 of the communication data d10, the external device 30 starts the transaction S500. Note that, in this case, the external device 30 continues the exclusive control without an end even when the series of processes of the processing S301 is completed.

In addition, when starting other processing that is different from the processing S301 after the start of the transaction S500, the application 11a associates control information indicating continuation or an end of the transaction with the request data fragment 1/m transmitted first in the processing. With this control information, the external device 30 can determine whether to end the transaction S500 that has started.

For example, the application 11a instructs the external device 30 in continuation of the transaction S500 in the processing S302. Specifically, when transmitting the first request data fragment 1/m in the processing S302, the application 11a sets the "normal" flag in the transaction type d113 of the communication data d10 shown in FIG. 12, and transmits the communication data to the external device 30. Accordingly, based on the "normal" flag set in the transaction type d113 of the communication data d10, the external device 30 can recognize that continuation of the transaction S500 has been instructed. Note that, in this case, the external device 30 continues the exclusive control without an end even when the series of processes of the processing S302 is completed.

In addition, the application 11a instructs the external device 30 in an end of the transaction S500 in the processing S303. Specifically, when transmitting the first request data fragment 1/m in the processing S303, the application 11a sets the "end" flag in the transaction type d113 of the communication data d10 shown in FIG. 12, and transmits the communication data to the external device 30. Accordingly, based on the "end" flag set in the transaction type d113 of the communication data d10, the external device 30 can recognize that the end of the transaction S500 has been instructed. Note that, in this case, the external device 30 ends the exclusive control with completion of the series of processes of the processing S303.

As described above as Practical example 2 with reference to FIG. 13, in the information processing system according to the present embodiment, exclusive control can also be performed in units of transactions by setting a plurality of processing rounds as one transaction.

Note that, even if the external device 30 receives the session ID1 or request data from another application 11 during a transaction while performing exclusive control in units of transactions, the device does not set the session ID1 or the request data as a processing target. Thus, as indicated by reference numeral S410 of FIG. 13, for example, the external device 30 does not set the session ID1 or the request data received between different processing rounds from the other application 11 as a processing target.

### [3.3.Practical example 3: Communication sequence when authentication process is performed]

Next, as Practical example 3, an example of exclusive control accompanied with an authentication process will be described. When the application 11a requests a process from the external device 30, there may be a considerable number of cases in which it is necessary for the external device 30 side to perform authentication of the requesting source.

As a specific example, there is a case in which user information is stored on the external device 30 side and comparison or updating of the user information is limited to a user whose user information has been registered. In such a case, the external device 30, for example, acquires authentication information indicating that a user whose user information has been registered from the application 11, performs authentication based on the acquired authentication information, and thereby verifies legitimacy of the user executing the application 11.

On the other hand, there may be a considerable number of cases in which a communication band of the information processing device 10 and the external device 30 is limited. In such a case, if authentication information is set to be transmitted and received between the information processing device 10 and the external device 30 in communication each time, the volume of data actually transmitted and received one time is further limited, and as a result, there is a possibility of the communication being restrained.

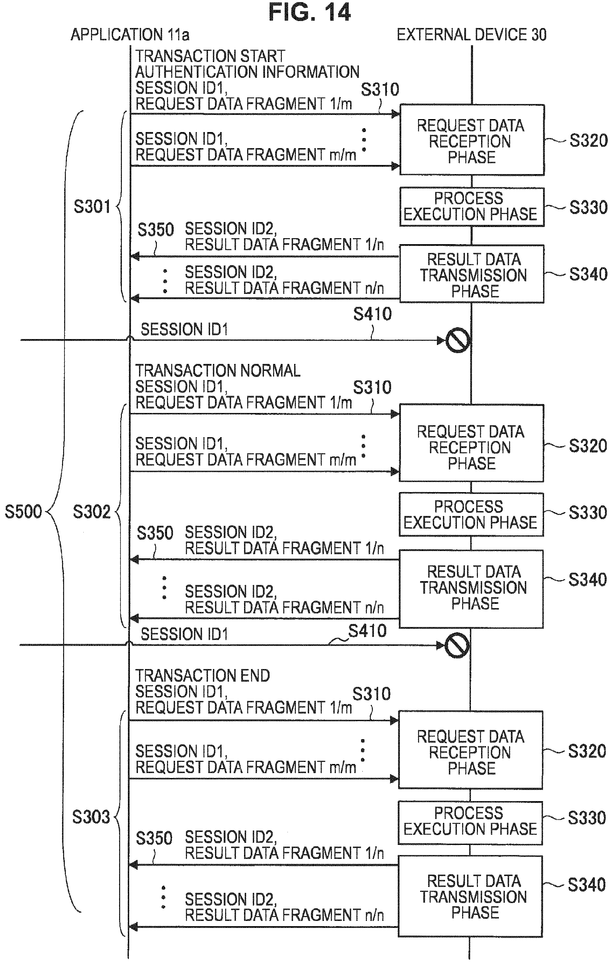

Thus, as Practical example 3, an information processing system in which the amount of data transmitted and received between an application 11 and the external device 30 can be suppressed to its minimum even when an authentication process based on authentication information is necessary will be described with reference to FIG. 14. FIG. 14 is an illustrative diagram for describing an example of the flow of a series of processes of the information processing system according to Practical example 3. Note that, in the present description, a case in which the application 11a and the external device 30 execute the series of processes shown in FIG. 13 accompanied with an authentication process will be described.

As is understood from comparison of FIG. 13 and FIG. 14, in the information processing system according to the present practical example, the application 11a associates authentication information only with request data fragment 1/m transmitted first in the first processing S301.

Upon acquiring the authentication information associated with the request data fragment 1/m, the external device 30 executes an authentication process based on the authentication information. When authentication succeeds, the external device 30 stores the authentication information used in the authentication in association with the session ID1 received along with the authentication information.

Note that, with regard to the succeeding process, when the received request data is associated with the same session ID as the session ID1 associated with the authentication information, the external device 30 recognizes that the request data is data based on a request from the user whose authentication has been completed.

With this configuration, it is not necessary to associate authentication information with each of the request data fragments 1/m to m/m transmitted from the application 11a to the external device 30 in the transaction S500 in the information processing system according to the present practical example. Thus, even if the authentication process based on authentication information is necessary in the information processing system according to the present practical example, the amount of data transmitted and received between the application 11 and the external device 30 can be suppressed to its minimum. In addition, since it is not necessary for the external device 30 to perform the authentication process in each process execution phase S330 of the processing S301 to S303, a load of the external device 30 resulting from the execution of the authentication process can be suppressed to its minimum.

### <4.Software configuration>

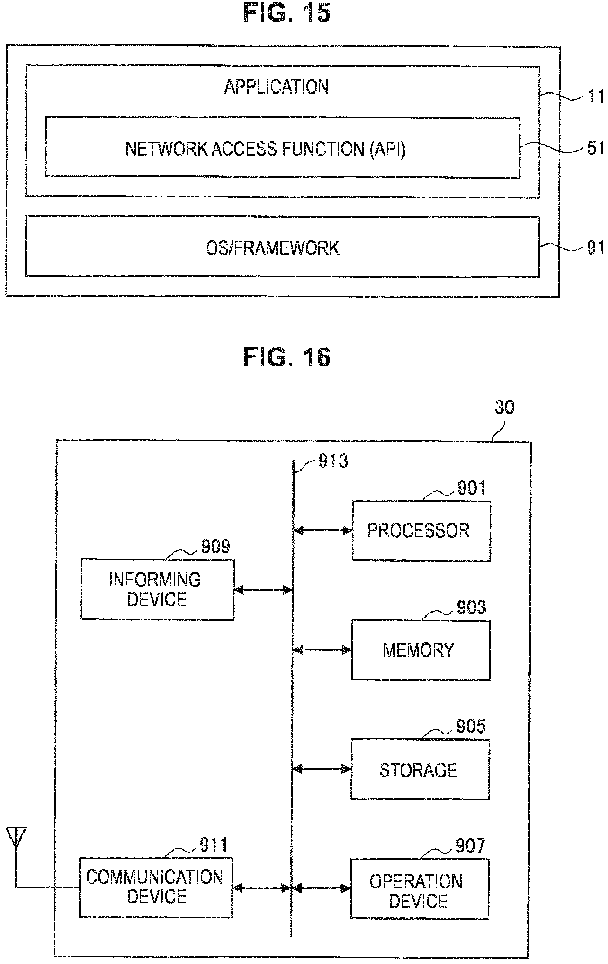

Next, an example of a software configuration for realizing an application 11 according to each embodiment described above will be described with reference to FIG. 15. FIG. 15 shows the example of the software configuration of the application according to each embodiment of the present disclosure.

Each function of the application 11 (i.e., the function of accessing the external device 30) described in each embodiment and each practical example can also be provided as, for example, an API 51 as shown in FIG. 15. In addition, the API 51 may be configured by, for example, using the function provided by a framework 91 provided by an OS of the information processing device 10 (for example, the wireless communication function).

With this configuration, for example, a vender that provides the communication unit 31 of the external device 30 can provide the API 51 for accessing the external device 30 via the communication unit 31 to developers of each application as a library. In addition, as the application 11 is produced based on the API 51 provided in that way, the application 11 can be allowed to access the external device 30 as described above in each embodiment and practical example.

### <5. Hardware configuration>

Next, an example of a hardware configuration of the external device 30 according to an embodiment of the present disclosure will be described with reference to FIG. 16. FIG. 16 is a diagram showing the example of the hardware configuration of the external device 30according to each embodiment of the present disclosure.

As shown in FIG. 16, the external device 30 according to the present embodiment includes a processor 901, a memory 903, a storage905, a communication device 911, and a bus 913. In addition, the external device 30 may include an operation device 907, and an informing device 909.

The processor 901 may be, for example, a central processing unit (CPU), a graphics processing unit (GPU), a digital signal processor (DSP), or a system-on-chip (SoC), and execute various processes of the information processing device 10. The processor 901 can be configured by, for example, an electronic circuit for executing various kinds of arithmetic processing. Note that the communication control unit 311, the session information generation unit 313, and the process execution unit 317 described above can be realized as the processor 901.

The memory 903 includes a random access memory (RAM) and a read only memory (RAM), and stores programs executed by the processor 901 and data. The storage 905 can include a storage medium such as a semiconductor memory or a hard disk. For example, the session information storage unit 315 can be configured by at least any of the memory 903 and the storage 905 or a combination of both.

The operation device 907 has a function of generating an input signal for performing an operation desired by a user. The operation device 907 may be configured with an input unit with which a user inputs information, for example, buttons and switches, an input control circuit which generates input signals based on inputs of a user and supplies the signals to the processor 901, and the like.

The informing device 909 is an example of an output device, and may be a device such as a liquid crystal display (LCD) device, or an organic light emitting diode (OLED) display. In such a case, the informing device 909 can inform a user of predetermined information by displaying a screen.

In addition, as another example, the informing device 909 may be a device that informs a user of predetermined information using patterns of flashing on or off, such as a light emitting diode (LED). In addition, the informing device 909 may be a device that informs a user of predetermined information by outputting a predetermined sound signal, such as a speaker.

Note that the informing unit 35 described above can be configured with the informing device 909.

The communication device 911 is a communication means provided in the information processing device 10, and communicates with an external device via a network. The communication device 911 is a wired or wireless communication interface. In a case of configuring the communication device 911 as a wireless communication interface, the communication device 911 may include a communication antenna, a radio frequency (RF) circuit, a baseband processor, and the like.

The communication device 911 has a function of performing various kinds of signal processing on signals received from external devices, and can supply digital signals generated from received analog signals to the processor 901. The communication control unit 311 described above can be configured with the communication device 911.

The bus 913 connects the processor 901, the memory 903, the storage 905, the operation device 907, the informing device 909, and the communication device 911 to one another. The bus 913 may include a plurality of kinds of buses.

In addition, a program for causing hardware such as a processor, a memory, a storage, and the like installed in a computer to exhibit the function equivalent to the configuration of the information processing device 10 described above can also be created. In addition, a computer-readable storage medium in which the program is recorded can also be provided.

### <6. Conclusion>

As described above, in the information processing system according to each embodiment of the present disclosure, an application 11 operating on the information processing device 10 and the external device 30 retain the session ID1 and ID2 shared together in advance when transmitting and receiving communication data to and from each other. On top of that, when transmitting communication data to the external device 30, the application 11 associates the session ID1 among the session ID1 and ID2 retained in advance with the communication data. In addition, when transmitting communication data to the application 11, the external device 30 associates the session ID2 among the session ID1 and ID2 retained in advance with the communication data.

With this configuration, the external device 30 can recognize whether or not the transmission source of the communication data is the application 11 retaining the same session ID as the session ID1 retained by itself based on the session ID1 associated with the received communication data. Thus, the external device 30 according to each embodiment of the present disclosure can set only the communication data transmitted from the application 11 retaining the same session ID as the session ID1 that it retains as a processing target exclusively.

In addition, the application 11 can recognize whether or not the destination of the communication data is the application itself based on the session ID2 associated with the received communication data.

Note that the application 11 and the external device 30 transmit communication data by associating different session IDs (i.e., the session ID1 and ID2) as described above. As one specific example, a session ID associated with communication data transmitted from the external device 30 to the application 11a is different from the session ID associated with communication data transmitted from the application 11a to the external device 30. Thus, even if another application 11z receives communication data transmitted to the application 11a, it is difficult for the application 11z to pretend to be the application 11a based on the session ID associated with the communication data.

With the configuration described above, the external device 30 can control access from each of the plurality of applications 11 exclusively in the information processing system according to each embodiment of the present disclosure even in a communication environment based on a standard in which one-to-one communication is assumed.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

### Reference Signs List

- 10: information processing device
- 11, 11a to 11c: application
- 111: communication control unit
- 113: session information generation unit
- 115: session information storage unit
- 117: process execution unit
- 30, 30a: external device
- 31: communication unit
- 311: communication control unit
- 313: session information generation unit
- 315: session information storage unit
- 317: process execution unit
- 33: data storage unit
- 35: informing unit

## Claims

1. An information processing device (30; 30a) designed for one-to-one communication comprising:
an acquisition unit configured to acquire first identification information from an external device (10),
wherein at least a part of the first identification information includes randomized information and in that the device (30; 30a) comprises
a generation unit configured to generate second identification information that is different from the acquired first identification information; and
a control unit configured to transmit a result of a process based on the communication data associated with the first identification information to the external device in association with the second identification information, wherein
the control unit is configured to set only communication data associated with the acquired first identification information out of communication data transmitted from the external device as a processing target exclusively;
wherein based on an instruction from the external device (10) that is a transmission source of the first identification information, the control unit is configured to terminate (S303) exclusive control (S500) in which only the communication data associated with the acquired first identification information is set as a processing target exclusively and
wherein based on control information from the external device (10), the control unit is configured to continue (S302) the exclusive control (S500) wherein the control information indicates continuation of the exclusive control and is associated with the communication data associated with the first identification information.

2. The information processing device according to claim 1, wherein the control unit is configured, when a period in which the communication data associated with the acquired first identification information is not received from the external device (10) is equal to or longer than a period decided in advance, to terminate exclusive control in which only the communication data associated with the first identification information is set as a processing target exclusively, or, wherein the control unit is configured, after completion of a process based on the communication data associated with the acquired first identification information, to terminate exclusive control in which only the communication data associated with the first identification information is set as a processing target exclusively.

3. The information processing device according to any preceding claim, wherein the control unit is configured, after completion of exclusive control in which only the communication data associated with the first identification information is set as a processing target exclusively, to discard the first identification information and/or, wherein the control unit is configured, based on an instruction from the external device that is an acquisition source of the first identification information, to start exclusive control in which only the communication data associated with the acquired first identification information is set as a processing target exclusively, and/or, wherein the control unit is configured, when communication data that is not associated with the first identification information is acquired during exclusive control in which only the communication data associated with the acquired first identification information is set as a processing target exclusively, to discard the communication data that is not associated with the first identification

4. The information processing device according to any preceding claim, wherein the control unit is configured, when other identification information that is different from the first identification information is acquired during exclusive control in which only the communication data associated with the acquired first identification information is set as a processing target exclusively, to discard the other identification information.

5. The information processing device according to claim 1, wherein the acquisition unit is configured to acquire the second identification information from the external device (10) that is the transmission source source of the first identification information, or, wherein the control unit is configured, when communication data that is not associated with other first identification information that is different from the first identification information is acquired during exclusive control in which only the communication data associated with the acquired first identification information is set as a processing target exclusively, to notify the external device (10) that is a transmission source of the communication data of information indicating that the communication data is not set as a processing target in association with the second identification information corresponding to the other first identification information.

6. The information processing device according to any preceding claim, wherein the acquisition unit is configured to acquire authentication information associated with the first identification information from the external device (10), and the control unit is configured, when authentication succeeds based on the authentication information, to recognize a transmission source of the communication data associated with the first identification information as a transmission source for which authentication has been performed.

7. The information processing device according to any preceding claim, wherein the acquisition unit is configured to acquire each of data fragments obtained by dividing the communication data associated with the first identification information into the data fragments, and the control unit is configured to continue exclusive control in which only the communication data associated with the acquired first identification information is set as a processing target exclusively until at least acquisition of the series of data fragments is completed, in particular, wherein the control unit is configured to recognize the completion of the acquisition of the series of data fragments based on control information for identifying the data fragments associated with the data fragments.

8. The information processing device according to any preceding claim, wherein the acquisition unit is configured to acquire control information for identifying the communication data associated with the data fragments, and the control unit is configured to recognize that the data fragments are data fragments constituting the communication data based on the acquired control information for identifying the communication data.

9. The information processing device according to any preceding claim, comprising: an informing unit (35) configured to perform informing of a process result based on the communication data associated with the acquired first identification information

10. An information processing device (10) comprising:
a generation unit (313) configured to generate first identification information; wherein
at least a part of the first identification information includes randomized information, in that
the generation unit (313) is configured to generate second identification information that is different from the first identification information; and in that
the information processing device (10) comprises a control unit configured to notify an external device (30) that is designed for one-to-one communication of the generated first identification information, and transmit communication data to the external device by associating the first identification information with the communication data, wherein the control unit is configured to set only a response associated with the second identification information out of responses transmitted from the external device as a processing target;
wherein the information processing device (10) that is a transmission source of the first identification information, is configured to transmit an instruction to the external device (30) to terminate (S303) exclusive control (S500) in which only the communication data associated with the first identification information is set as a processing target exclusively and to transmit control information to the external device (30) to continue (S302) the exclusive control (S500) wherein the control information indicates continuation of the exclusive control and is associated with the communication data associated with the first identification

11. The information processing device according to claim 10, wherein the generation unit is configured, based on the first identification information generated as the identification information, to generate the second identification information that is different from the first identification information.

12. An information processing method performed by an information processing device (30, 30a) designed for one-to-one communication comprising:
acquiring, by an acquisition unit of the device,
first identification information at least a part of which includes randomized information from an external device (10),
generating, by a generation unit of the device,
second identification information that is different from the acquired first identification information,
transmitting, by a control unit of the device,
a result of a process based on the communication data associated with the first identification information to the external device in association with the second identification information,
setting, by the control unit, only communication data associated with the acquired first identification information out of communication data transmitted from the external device (10) as a processing target exclusively, and
based on an instruction from the external device (10) that is a transmission source of the first identification information, terminating (S303) exclusive control (S500) in which only the communication data associated with the acquired first identification information is set as a processing target exclusively and Z r based on control information from the external device (10), continuing (S302) the exclusive control (S500) wherein the control information indicates continuation of the exclusive control and is associated with the communication data associated with the first identification

13. An information processing method performed by an information processing device (10) and comprising:
generating, by a generation unit (313) of the device, first identification information at least a part of which includes randomized information and second identification information that is different from the first identification information,
notifying, by a control unit of the device, an external device (30, 30a) that is designed for one-to-one communication of the generated first identification information,
transmitting, by the control unit, communication data to the external device (30, 30a) by associating the first identification information with the communication data,
setting, by the control unit, only a response associated with the second identification information out of responses transmitted from the external device as a processing target, and
transmitting an instruction to the external device (30) to terminate (S303) exclusive control (S500) in which only the communication data associated with the first identification information is set as a processing target exclusively and transmitting control information to the external device (30) to continue (S302) the exclusive control (S500) wherein the control information indicates
continuation of the exclusive control and is associated with the communication data associated with the first identification information.

14. A program comprising program code means causing a computer to execute a method as claimed in claim 12 or 13, when said computer program is carried out on the computer.

## Patentansprüche

1. Informationsverarbeitungsvorrichtung (30; 30a), die für eine Eins-zu-eins-Kommunikation konzipiert ist und Folgendes umfasst:
eine Erfassungseinheit, die dazu ausgelegt ist, erste Identifikationsinformationen von einer externen Vorrichtung (10) zu erfassen,
wobei mindestens ein Teil der ersten Identifikationsinformationen zufällig ausgewählte Informationen beinhaltet, und dadurch, dass die Vorrichtung (30; 30a) Folgendes umfasst:
eine Erzeugungseinheit, die dazu ausgelegt ist, zweite Identifikationsinformationen zu erzeugen, die sich von den erfassten ersten Identifikationsinformationen unterscheiden; und
eine Steuereinheit, die dazu ausgelegt ist, auf Basis der Kommunikationsdaten, die mit den ersten Identifikationsinformationen verknüpft sind, in Verbindung mit den zweiten Identifikationsinformationen ein Ergebnis eines Prozesses zur externen Vorrichtung zu übertragen, wobei
die Steuereinheit dazu ausgelegt ist, von Kommunikationsdaten, die von der externen Vorrichtung übertragen werden, ausschließlich nur Kommunikationsdaten als ein Verarbeitungsziel einzustellen, die mit den erfassten ersten Identifikationsinformationen verknüpft sind;
wobei die Steuereinheit auf Basis einer Anweisung von der externen Vorrichtung (10), die eine Übertragungsquelle der ersten Identifikationsinformationen ist, zu Folgendem ausgelegt ist:
Beenden (S303) der ausschließlichen Steuerung (S500), bei der nur die Kommunikationsdaten, die mit den erfassten ersten Identifikationsinformationen verknüpft sind, ausschließlich als ein Verarbeitungsziel eingestellt werden, und
wobei die Steuereinheit auf Basis von Steuerinformationen von der externen Vorrichtung (10) dazu ausgelegt ist, die ausschließliche Steuerung (S500) fortzusetzen (S302), wobei die Steuerinformationen die Fortsetzung der ausschließlichen Steuerung anzeigen und mit den Kommunikationsdaten verknüpft sind, die mit den ersten Identifikationsinformationen verknüpft sind.

2. Informationsverarbeitungsvorrichtung nach Anspruch 1, wobei die Steuereinheit, wenn eine Periode, in der die Kommunikationsdaten, die mit den erfassten ersten Identifikationsinformationen verknüpft sind, nicht von der externen Vorrichtung (10) empfangen werden, gleich oder länger als eine Periode ist, die vorab beschlossen wurde, die ausschließliche Steuerung, bei der nur die Kommunikationsdaten, die mit den ersten Identifikationsinformationen verknüpft sind, ausschließlich als ein Verarbeitungsziel eingestellt werden, zu beenden, oder wobei die Steuereinheit dazu ausgelegt ist, nach Abschluss eines Prozesses auf Basis der Kommunikationsdaten, die mit den erfassten ersten Identifikationsinformationen verknüpft sind, die ausschließliche Steuerung, bei der nur die Kommunikationsdaten, die mit den ersten Identifikationsinformationen verknüpft sind, ausschließlich als ein Verarbeitungsziel eingestellt werden, zu beenden.

3. Informationsverarbeitungsvorrichtung nach einem der vorhergehenden Ansprüche, wobei die Steuereinheit dazu ausgelegt ist, nach Abschluss der ausschließlichen Steuerung, bei der nur die Kommunikationsdaten, die mit den ersten Identifikationsinformationen verknüpft sind, ausschließlich als ein Verarbeitungsziel eingestellt werden, die ersten Identifikationsinformationen zu verwerfen, und/oder wobei die Steuereinheit dazu ausgelegt ist, auf Basis einer Anweisung von der externen Vorrichtung, die eine Erfassungsquelle der ersten Identifikationsinformationen ist, die ausschließliche Steuerung, bei der nur die Kommunikationsdaten, die mit den erfassten ersten Identifikationsinformationen verknüpft sind, ausschließlich als ein Verarbeitungsziel eingestellt werden, zu starten, und/oder wobei die Steuereinheit dazu ausgelegt ist, wenn während der ausschließlichen Steuerung, bei der nur die Kommunikationsdaten, die mit den erfassten ersten Identifikationsinformationen verknüpft sind, ausschließlich als ein Verarbeitungsziel eingestellt werden, Kommunikationsdaten, die nicht mit den ersten Identifikationsinformationen verknüpft sind, erfasst werden, die Kommunikationsdaten, die nicht mit den ersten Identifikationsinformationen verknüpft sind, zu verwerfen.

4. Informationsverarbeitungsvorrichtung nach einem der vorhergehenden Ansprüche, wobei die Steuereinheit dazu ausgelegt ist, wenn während der ausschließlichen Steuerung, bei der nur die Kommunikationsdaten, die mit den erfassten ersten Identifikationsinformationen verknüpft sind, ausschließlich als ein Verarbeitungsziel eingestellt werden, andere Identifikationsinformationen, die sich von den ersten Identifikationsinformationen unterscheiden, erfasst werden, die anderen Identifikationsinformationen zu verwerfen.

5. Informationsverarbeitungsvorrichtung nach Anspruch 1, wobei die Erfassungseinheit dazu ausgelegt ist, die zweiten Identifikationsinformationen von der externen Vorrichtung (10), die die Übertragungsquelle Quelle der ersten Identifikationsinformationen ist, zu erfassen, oder wobei die Steuereinheit dazu ausgelegt ist, wenn während der ausschließlichen Steuerung, bei der nur die Kommunikationsdaten, die mit den erfassten ersten Identifikationsinformationen verknüpft sind, ausschließlich als ein Verarbeitungsziel eingestellt werden, Kommunikationsdaten, die nicht mit anderen ersten Identifikationsinformationen, die sich von den ersten Identifikationsinformationen unterscheiden, verknüpft sind, erfasst werden, die externe Vorrichtung (10), die eine Übertragungsquelle der Kommunikationsdaten ist, über Informationen zu benachrichtigen, die anzeigen, dass die Kommunikationsdaten nicht in Verbindung mit den zweiten Identifikationsinformationen, die den anderen ersten Identifikationsinformationen entsprechen, als ein Verarbeitungsziel eingestellt sind.

6. Informationsverarbeitungsvorrichtung nach einem der vorhergehenden Ansprüche, wobei
die Erfassungseinheit dazu ausgelegt ist, Authentifizierungsinformationen, die mit den ersten Identifikationsinformationen verknüpft sind, von der externen Vorrichtung (10) zu erfassen, und
die Steuereinheit dazu ausgelegt ist, wenn die Authentifizierung auf Basis der Authentifizierungsinformationen erfolgreich ist, eine Übertragungsquelle der Kommunikationsdaten, die mit den ersten Identifikationsinformationen verknüpft sind, als eine Übertragungsquelle zu erkennen, für die die Authentifizierung durchgeführt wurde.

7. Informationsverarbeitungsvorrichtung nach einem der vorhergehenden Ansprüche, wobei
die Erfassungseinheit dazu ausgelegt ist, jedes von Datenfragmenten zu erfassen, die durch Teilen der Kommunikationsdaten, die mit den ersten Identifikationsinformationen verknüpft sind, in die Datenfragmente erhalten werden, und
die Steuereinheit dazu ausgelegt ist, die ausschließliche Steuerung, bei der nur die Kommunikationsdaten, die mit den erfassten ersten Identifikationsinformationen verknüpft sind, ausschließlich als ein Verarbeitungsziel eingestellt werden, mindestens fortzusetzen, bis die Erfassung der Serie von Datenfragmenten abgeschlossen ist, insbesondere wobei die Steuereinheit dazu ausgelegt ist, auf Basis von Steuerinformationen zum Identifizieren von Datenfragmenten, die mit den Datenfragmenten verknüpft sind, den Abschluss der Erfassung der Serie der Datenfragmente zu erkennen.

8. Informationsverarbeitungsvorrichtung nach einem der vorhergehenden Ansprüche, wobei
die Erfassungseinheit dazu ausgelegt ist, Steuerinformationen zum Identifizieren der Kommunikationsdaten, die mit den Datenfragmenten verknüpft sind, zu erfassen, und die Steuereinheit dazu ausgelegt ist, auf Basis der erfassten Steuerinformationen zum Identifizieren der Kommunikationsdaten zu erkennen, dass die Datenfragmente Datenfragmente sind, die die Kommunikationsdaten konstituieren.

9. Informationsverarbeitungsvorrichtung nach einem der vorhergehenden Ansprüche, die Folgendes umfasst:
eine Informationseinheit (35), die dazu ausgelegt ist, auf Basis der Kommunikationsdaten, die mit den erfassten ersten Identifikationsinformationen verknüpft sind, das Informieren über ein Prozessergebnis durchzuführen.

10. Informationsverarbeitungsvorrichtung (10), die Folgendes umfasst:
eine Erzeugungseinheit (313), die dazu ausgelegt ist, erste Identifikationsinformationen zu erzeugen; wobei
mindestens ein Teil der ersten Identifikationsinformationen zufällig ausgewählte Informationen beinhaltet und dadurch, dass die Erzeugungseinheit (313) dazu ausgelegt ist, zweite Identifikationsinformationen zu erzeugen, die sich von den ersten Identifikationsinformationen unterscheiden; und dadurch, dass
die Informationsverarbeitungsvorrichtung (10) eine Steuereinheit umfasst, die dazu ausgelegt ist, eine externe Vorrichtung (30), die für eine Eins-zu-eins-Kommunikation konzipiert ist, über die erzeugten ersten Identifikationsinformationen zu benachrichtigen und Kommunikationsdaten durch Verknüpfen der ersten Identifikationsinformationen mit den Kommunikationsdaten zur externen Vorrichtung zu übertragen, wobei die Steuereinheit dazu ausgelegt ist, von Antworten, die von der externen Vorrichtung übertragen werden, nur Antworten, die mit den zweiten Identifikationsinformationen verknüpft sind, als ein Verarbeitungsziel einzustellen;
wobei die Informationsverarbeitungsvorrichtung (10), die eine Übertragungsquelle der ersten Identifikationsinformationen ist, dazu ausgelegt ist, eine Anweisung zur externen Vorrichtung (30) zu übertragen, um die ausschließliche Steuerung (S500), bei der nur die Kommunikationsdaten, die mit den ersten Identifikationsinformationen verknüpft sind, ausschließlich als ein Verarbeitungsziel eingestellt werden, zu beenden (S303) und Steuerinformationen zur externen Vorrichtung (30) zu übertragen, um die ausschließliche Steuerung (S500) fortzusetzen (S302), wobei die Steuerinformationen die Fortsetzung der ausschließlichen Steuerung anzeigen und mit den Kommunikationsdaten verknüpft sind, die mit den ersten Identifikationsinformationen verknüpft sind.

11. Informationsverarbeitungsvorrichtung nach Anspruch 10, wobei
die Erzeugungseinheit dazu ausgelegt ist, auf Basis der ersten Identifikationsinformationen, die als die Identifikationsinformationen erzeugt werden, die zweiten Identifikationsinformationen zu erzeugen, die sich von den ersten Identifikationsinformationen unterscheiden.

12. Informationsverarbeitungsverfahren, das von einer Informationsverarbeitungsvorrichtung (30; 30a) durchgeführt wird, die für eine Eins-zu-eins-Kommunikation konzipiert ist, das Folgendes umfasst:
Erfassen von ersten Identifikationsinformationen, von denen mindestens ein Teil zufällig ausgewählte Informationen beinhaltet, durch eine Erfassungseinheit der Vorrichtung von einer externen Vorrichtung (10),
Erzeugen von zweiten Identifikationsinformationen, die sich von den erfassten ersten Identifikationsinformationen unterscheiden, durch eine Erzeugungseinheit der Vorrichtung,
Übertragen eines Ergebnisses eines Prozesses in Verbindung mit den zweiten Identifikationsinformationen auf Basis der Kommunikationsdaten, die mit den ersten Identifikationsinformationen verknüpft sind, durch eine Steuereinheit der Vorrichtung zur externen Vorrichtung, ausschließliches Einstellen nur von Kommunikationsdaten, die mit den erfassten ersten Identifikationsinformationen verknüpft sind, von Kommunikationsdaten, die von der externen Vorrichtung (10) übertragen werden, als ein Verarbeitungsziel durch die Steuereinheit, und
Beenden (S303) der ausschließlichen Steuerung (S500), bei der nur die Kommunikationsdaten, die mit den erfassten ersten Identifikationsinformationen verknüpft sind, ausschließlich als ein Verarbeitungsziel eingestellt werden, auf Basis einer Anweisung von der externen Vorrichtung (10), die eine Übertragungsquelle der ersten Identifikationsinformationen ist, und Fortsetzen (S302) der ausschließlichen Steuerung (S500), wobei die Steuerinformationen die Fortsetzung der ausschließlichen Steuerung anzeigen und mit den Kommunikationsdaten verknüpft sind, die mit den ersten Identifikationsinformationen verknüpft sind, auf Basis von Steuerinformationen von der externen Vorrichtung (10) .

13. Informationsverarbeitungsverfahren, das von einer Informationsverarbeitungsvorrichtung (10) durchgeführt wird und Folgendes umfasst:
Erzeugen von ersten Identifikationsinformationen, von denen mindestens ein Teil zufällig ausgewählte Informationen beinhaltet, und zweiten Identifikationsinformationen, die sich von den ersten Identifikationsinformationen unterscheiden, durch eine Erzeugungseinheit (313) der Vorrichtung,
Benachrichtigen einer externen Vorrichtung (30; 30a), die für eine Eins-zu-eins-Kommunikation konzipiert ist, durch eine Steuereinheit der Vorrichtung über die erzeugten ersten Identifikationsinformationen,
Übertragen von Kommunikationsdaten durch die Steuereinheit zur externen Vorrichtung (30; 30a) durch Verknüpfen der ersten Identifikationsinformationen mit den Kommunikationsdaten,
Einstellen nur einer Antwort, die mit den zweiten Identifikationsinformationen verknüpft ist, von Antworten, die von der externen Vorrichtung übertragen werden, durch die Steuereinheit als ein Verarbeitungsziel, und
Übertragen einer Anweisung zur externen Vorrichtung (30), um die ausschließliche Steuerung (S500), bei der nur die Kommunikationsdaten, die mit den ersten Identifikationsinformationen verknüpft sind, ausschließlich als ein Verarbeitungsziel eingestellt werden, zu beenden (S303), und Übertragen von Steuerinformationen zur externen Vorrichtung (30), um die ausschließliche Steuerung (S500) fortzusetzen (S302), wobei die Steuerinformationen die Fortsetzung der ausschließlichen Steuerung anzeigen und mit den Kommunikationsdaten verknüpft sind, die mit den ersten Identifikationsinformationen verknüpft sind.

14. Programm, das Programmcodemittel umfasst, die einen Computer veranlassen, ein Verfahren wie in Anspruch 12 oder 13 beansprucht, auszuführen, wenn das Computerprogramm auf dem Computer läuft.

## Revendications

1. Dispositif de traitement d'informations (30; 30a) conçu pour les communications individuelles comprenant:
une unité d'acquisition configurée pour acquérir des premières informations d'identification à partir d'un dispositif externe (10),
dans lequel au moins une partie des premières informations d'identification comporte des informations randomisées et en ce que le dispositif (30; 30a) comprend
une unité de génération configurée pour générer des secondes informations d'identification différentes des premières informations d'identification acquises; et
une unité de commande configurée pour transmettre au dispositif externe le résultat d'un processus basé sur les données de communication associées aux premières informations d'identification en association avec les secondes informations d'identification, dans lequel
l'unité de commande est configurée pour définir uniquement des données de communication associées aux premières informations d'identification acquises à partir de données de communication transmises par le dispositif externe en tant que cible de traitement exclusivement;
dans lequel, sur la base d'une instruction par le dispositif externe (10) qui est une source de transmission des premières informations d'identification, l'unité de commande est configurée pour cesser (S303) une commande exclusive (S500) dans laquelle seules les données de communication associées aux premières informations d'identification acquises sont définies comme cible de traitement exclusivement, et
dans lequel en fonction d'informations de commande provenant du dispositif externe (10), l'unité de commande est configurée pour continuer (S302) la commande exclusive (S500), les informations de commande indiquant la continuation de la commande exclusive et étant associées aux données de communication associées aux premières informations d'identification.

2. Dispositif de traitement d'informations selon la revendication 1, dans lequel l'unité de commande est configurée, lorsqu'une période au cours de laquelle les données de communication associées aux premières informations d'identification acquises ne sont pas reçues du dispositif externe (10) est égale ou supérieure à une période décidée à l'avance, pour cesser la commande exclusive dans laquelle seules les données de communication associées aux premières informations d'identification sont définies comme cible de traitement exclusivement, ou, dans lequel l'unité de commande est configurée, après l'achèvement d'un processus basé sur les données de communication associées aux premières informations d'identification acquises, pour cesser la commande exclusive dans laquelle seules les données de communication associées aux premières informations d'identification sont définies comme cible de traitement exclusivement.

3. Dispositif de traitement d'informations selon n'importe quelle revendication précédente, dans lequel l'unité de commande est configurée, après l'achèvement de la commande exclusive dans laquelle seules les données de communication associées aux premières informations d'identification sont définies comme cible de traitement exclusivement, pour rejeter les premières informations d'identification et/ou, dans lequel l'unité de commande est configurée, sur la base d'une instruction par le dispositif externe qui est une source d'acquisition des premières informations d'identification, pour lancer la commande exclusive dans laquelle seules les données de communication associées aux premières informations d'identification acquises sont définies comme cible de traitement exclusivement, et/ou, dans lequel l'unité de commande est configurée, lorsque des données de communication qui ne sont pas associées aux premières informations d'identification sont acquises lors de la commande exclusive dans laquelle seules les données de communication associées aux premières informations d'identification acquises sont définies comme cible de traitement exclusivement, pour rejeter les données de communication qui ne sont pas associées aux premières informations d'identification.

4. Dispositif de traitement d'informations selon n'importe quelle revendication précédente, dans lequel l'unité de commande est configurée, lorsque d'autres informations d'identification différentes des premières informations d'identification sont acquises au cours d'une commande exclusive dans laquelle seules les données de communication associées aux premières informations d'identification acquises sont définies comme cible de traitement exclusivement, pour rejeter les autres informations d'identification.

5. Dispositif de traitement d'informations selon la revendication 1, dans lequel l'unité d'acquisition est configurée pour acquérir les secondes informations d'identification du dispositif externe (10) qui est la source source d'acquisition des premières informations d'identification, ou, dans lequel l'unité de commande est configurée, lorsque des données de communication qui ne sont pas associées à d'autres premières informations d'identification différentes des premières informations d'identification sont acquises lors d'une commande exclusive dans laquelle seules les données de communication associées aux premières informations d'identification acquises sont définies comme cible de traitement exclusivement, pour notifier au dispositif externe (10) qui est une source de transmission des données de communication, des informations indiquant que les données de communication ne sont pas définies comme cible de traitement en association avec les secondes informations d'identification correspondant aux autres premières informations d'identification.

6. Dispositif de traitement d'informations selon n'importe quelle revendication précédente, dans lequel
l'unité d'acquisition est configurée pour acquérir des informations d'authentification associées aux premières informations d'identification à partir du dispositif externe (10), et
l'unité de commande est configurée, lorsque l'authentification réussit sur la base des informations d'authentification, pour reconnaître une source de transmission des données de communication associées aux premières informations d'identification en tant que source de transmission pour laquelle une authentification a été réalisée.

7. Dispositif de traitement d'informations selon n'importe quelle revendication précédente, dans lequel l'unité d'acquisition est configurée pour acquérir chacun de fragments de données obtenus en divisant les données de communication associées aux premières informations d'identification en les fragments de données, et
l'unité de commande est configurée pour continuer une commande exclusive dans laquelle seules les données de communication associées aux premières informations d'identification acquises sont définies comme cible de traitement exclusivement, jusqu'à ce qu'au moins l'acquisition de la série de fragments de données soit achevée, en particulier, dans lequel l'unité de commande est configurée pour reconnaître l'achèvement de l'acquisition de la série de fragments de données sur la base d'informations de commande pour identifier les fragments de données associés aux fragments de données.

8. Dispositif de traitement d'informations selon n'importe quelle revendication précédente, dans lequel
l'unité d'acquisition est configurée pour acquérir des informations de commande afin d'identifier les données de communication associées aux fragments de données, et l'unité de commande est configurée pour reconnaître que les fragments de données sont des fragments de données constituant les données de communication sur la base des informations de commande acquises pour identifier les données de communication.

9. Dispositif de traitement d'informations selon n'importe quelle revendication précédente, comprenant:
une unité d'information (35) configurée pour rendre compte d'un résultat de processus sur la base des données de communication associées aux premières informations d'identification acquises.

10. Dispositif de traitement d'informations (10) comprenant:
une unité de génération (313) configurée pour générer des premières informations d'identification; dans lequel
au moins une partie des premières informations d'identification comprend des informations randomisées, en ce que
l'unité de génération (313) est configurée pour générer des secondes informations d'identification différentes des premières informations d'identification; et en ce que
le dispositif de traitement d'informations (10) comprend une unité de commande configurée pour notifier, à un dispositif externe (30) conçu pour des communications individuelles, des premières informations d'identification générées et transmettre des données de communication au dispositif externe en associant les premières informations d'identification aux données de communication, dans lequel l'unité de commande est configurée pour définir uniquement une réponse associée aux secondes informations d'identification parmi des réponses transmises par le dispositif externe en tant que cible de traitement;
dans lequel le dispositif de traitement d'informations (10) qui est une source de transmission des premières informations d'identification, est configuré pour transmettre au dispositif externe (30) une instruction de cesser (S303) la commande exclusive (S500) dans laquelle seules les données de communication associées aux premières informations d'identification acquises sont définies comme cible de traitement exclusivement et transmettre au dispositif externe (30)des informations de commande pour continuer (S302) la commande exclusive (S500), les informations de commande indiquant la continuation de la commande exclusive et étant associées aux données de communication associées aux premières informations d'identification.

11. Dispositif de traitement d'informations selon la revendication 10, dans lequel
l'unité de génération est configurée, sur la base des premières informations d'identification générées en tant qu'informations d'identification, pour générer les secondes informations d'identification qui sont différentes des premières informations d'identification.

12. Procédé de traitement d'informations réalisé par un dispositif de traitement d'informations (30; 30a) conçu pour des communications individuelles comprenant:
l'acquisition, par une unité d'acquisition du dispositif, de premières informations d'identification dont au moins une partie comprend des informations randomisées à partir d'un dispositif externe (10),
la génération, par une unité de génération du dispositif, de secondes informations d'identification différentes des premières informations d'identification acquises,
la transmission, par une unité de commande du dispositif, du résultat d'un processus basé sur les données de communication associées aux premières informations d'identification au dispositif externe en association avec les secondes informations d'identification,
la définition, par l'unité de commande, uniquement des données de communication associées aux premières informations d'identification acquises à partir des données de communication transmises par le dispositif externe (10) en tant que cible de traitement exclusivement, et
sur la base d'une instruction par le dispositif externe (10) qui est une source de transmission des premières informations d'identification, la cessation (S303) de la commande exclusive (S500) dans laquelle seules les données de communication associées aux premières informations d'identification acquises sont définies comme cible de traitement exclusivement et sur la base d'informations de commande provenant du dispositif externe (10), la continuation (S302) de la commande exclusive (S500), les informations de commande indiquant la continuation de la commande exclusive et étant associées à des données communication associées aux premières informations d'identification.

13. Procédé de traitement d'informations réalisé par un dispositif de traitement d'informations (10) et comprenant:
la génération, par une unité de génération (313) du dispositif, de premières informations d'identification dont au moins une partie comporte des informations randomisées et de secondes informations d'identification qui sont différentes des premières informations d'identification,
la notification, par une unité de commande du dispositif, à un dispositif externe (30; 30a) conçu pour une communication individuelle, des premières informations d'identification générées,
la transmission, par l'unité de commande, de données de communication au dispositif externe (30; 30a) en associant les premières informations d'identification aux données de communication,
la définition, par l'unité de commande, d'uniquement une réponse associée aux secondes informations d'identification parmi des réponses transmises par le dispositif externe en tant que cible de traitement, et la transmission au dispositif externe (30) d'une instruction de cesser (S303) une commande exclusive (S500) dans laquelle seules les données de communication associées aux premières informations d'identification acquises sont définies comme cible de traitement exclusivement et la transmission au dispositif externe (30) d'informations de commande de continuation (S302) de la commande exclusive (S500), les informations de commande indiquant le maintien de la commande exclusive et étant associées aux données de communication associées aux premières informations d'identification.

14. Programme comprenant un moyen de code de programme amenant un ordinateur à exécuter un procédé selon la revendication 12 ou 13, lorsque ledit programme d'ordinateur est exécuté sur l'ordinateur.
